(19) Europäisches Patentamt
European Patent Office
Office européen des brevets

(11) **EP 2 713 075 B1**

(12) **EUROPEAN PATENT SPECIFICATION**

(45) Date of publication and mention
of the grant of the patent:
**19.02.2020 Bulletin 2020/08**

(51) Int Cl.:
**F16D 65/092** *(2006.01)*    **F16D 55/224** *(2006.01)*
**F16D 69/04** *(2006.01)*

(21) Application number: **13184162.9**

(22) Date of filing: **12.09.2013**

(54) **Disc brake pad and brake caliper device**

Scheibenbremsbelag und Bremssattelvorrichtung

Plaquette de frein à disque et dispositif d'étrier de frein

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2012 JP 2012203918**

(43) Date of publication of application:
**02.04.2014 Bulletin 2014/14**

(73) Proprietor: **Nabtesco Corporation
Tokyo 102-0093 (JP)**

(72) Inventor: **Yano, Masataka
Hyogo, 651-2271 (JP)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**EP-A1- 0 073 897    EP-A2- 1 717 475
DE-A1- 4 436 457    DE-A1- 19 840 065**

**Description**

BACKGROUND OF THE INVENTION

Field of the Invention

The present invention relates to a disc brake pad that is used in a disc brake device to be disposed in a vehicle and that can be pressed against a disc disposed so as to rotate along with an axle or a wheel in the vehicle, and also relates to a brake caliper device that includes this disc brake pad.

Description of Related Art

Conventionally, a disc brake pad that can be pressed against a disc disposed so as to rotate along with an axle or a wheel is used in a disc brake device disposed in a vehicle. It is often the case that a disc brake pad is used in an environment where there are repeated braking operations from the state in which the disc is rotating at a high speed. In such a case, thermal expansion such as phase transformation, which is a change in crystal structure, occurs in the material making up the disc, and recessions and protrusions readily form due to the formation of places where the frictional braking face of the disc partially rises up. When surface recessions and protrusions are formed due to the formation of partially raised places on the frictional braking face of the disc, such places are forcefully pressed against the disc brake pad. For this reason, these places that are forcefully pressed against portions of the disc brake pad of the disc reach a higher temperature than that in the surrounding region due to frictional heat, thus becoming heat spots.

When these above-described heat spots are formed, heat cracks readily form in the portions of the disc where the heat spots are formed, leading to the problem of a reduction in the lifetime of the disc. It is therefore desirable to realize a disc brake pad that can suppress the formation of heat spots on the disc.

Japanese Patent No. 4090499 (p. 5 and FIGS. 1 to 5) discloses a disc brake pad directed to the equalization of surface pressure generated between the frictional braking face of a disc and a lining member that is pressed against the frictional braking face. The disc brake pad disclosed in Japanese Patent No. 4090499 includes a brake lining that is configured by many group members (1), and a lining support member (19).

In this disc brake pad, each of the many group members (1) includes multiple lining members (3) and a support plate (7) that supports the lining members (3). Each of the lining members (3) is pivotably coupled with the support plate (7) by a pivoting support mechanism that uses a countersunk screw (9), a spherical cap (11), a compression coil spring (13), and a nut (15). Note that the spherical cap (11) is fit into a shell-shaped notch in the support plate (7). The lining members (3) are each pivotably coupled with the support plate (7) due to the spherical cap (11) sliding against the shell-shaped notch.

Also, each of the support plates (7) is pivotably coupled with the lining support member (19) by a pivoting support mechanism that uses a screw (21), a spherical cap (23), a compression coil spring (25), and a nut (27). Note that the spherical cap (23) is configured so as to slide against the lining support member (19) due to having a structure similar to the structure in which the spherical cap (11) slides against the support plate (7).

Document EP 1 717 475 A1 comprises a friction member assembly comprising a torque receiving plate, a guide plate and a plurality of lining members integrated to said guide plate.

SUMMARY OF THE INVENTION

By having a configuration directed to the equalization of surface pressure between the frictional braking face of the disc and the lining member, the disc brake pad disclosed in Japanese Patent No. 4090499 is thought to aim to suppress the formation of heat spots and suppress the formation of hot cracks. However, the disc brake pad disclosed in Japanese Patent No. 4090499 employs a pivoting support mechanism configured such that spherical caps (11, 23) are fit into shell-shaped notches provided in supporting members. According to this pivoting support mechanism, the lining member (3) is pivotably coupled with the support plate (7), and the support plate (7) is pivotably coupled with the lining support member (19).

The disc brake pad disclosed in Japanese Patent No. 4090499 is provided with many of the above-described pivoting support mechanism, and it is necessary to provide many structures in which raised spherical surfaces are fit into and slide against recessed spherical surfaces. This therefore requires a large amount of difficult spherical surface processing for processing sliding spherical surfaces. The disc brake pad disclosed in Japanese Patent No. 4090499 therefore has the problem of inviting an increase in the number of processing steps.

Furthermore, in the case of the above-described pivoting support mechanism disclosed in Japanese Patent No. 4090499, load is generated along a direction parallel to the frictional braking face due to frictional braking force generated between the disc and the lining members, and the entirety of this load acts on the sliding spherical faces. The friction generated by this load thus becomes resistance between the spherical faces that come into contact, and this readily impairs smooth sliding between the spherical faces that come into contact. This has the problem of readily impairing the function by which the force of pressing against the frictional braking face is adjusted for the lining members relative to each other. It is therefore desirable to realize a disc brake pad that enables the smooth implementation of a function by which the force of pressing against the frictional braking face is adjusted for the lining members relative to each other.

In light of the above-described circumstances, an object of the present invention is to provide a disc brake pad that can suppress the formation of heat spots on a disc and suppress the formation of heat cracks, as well as can reduce the number of processing steps and can enable the smooth implementation of a function by which the force of pressing against the frictional braking face is adjusted for the lining members relative to each other. Another object of the present invention is to provide a brake caliper device that includes this disc brake pad.

A disc brake pad according to one aspect of the present invention for achieving the above-described objects is related to a disc brake pad according to claim 1.

According to this configuration, multiple lining members are supported to the lining support portion via the swing adjustment mechanism. Furthermore, in the swing adjustment mechanism, multiple lining members are swingably supported to the first swing adjustment member. The position in the direction of pressing against the frictional braking face is adjusted for the lining members relative to each other by the swinging of the first swing adjustment member. Specifically, even if surface recessions and protrusions are formed due to the formation of partially raised places on surface of the frictional braking face due to thermal expansion, the position in the pressing direction is adjusted for the lining members, which are supported to the first swing adjustment member, relative to each other so as to imitate the recessions and protrusions on the surface. Thus, the pressing force against the frictional braking face is adjusted for the lining members relative to each other. Accordingly, when a partially raised place is formed on the surface of the frictional braking face, the corresponding lining member is prevented from being pressed against that place more forcefully than the lining members that correspond to the surrounding region. As a result, the formation of heat spots on the disc is suppressed, and the formation of heat cracks on the disc is also suppressed.

Also, according to the above configuration, load that is generated along a direction parallel to the frictional braking face due to frictional braking force generated between the disc and the lining members is supported by the load supporting member due to the load supporting member coming into contact with the lining members. This prevents the load generated along the direction parallel to the frictional braking face from acting on places where the lining members are swingably supported to the first swing adjustment member, or the place where the first swing adjustment member is supported in the swing adjustment mechanism. This suppresses friction generated by the aforementioned load from becoming resistance with respect to the operation of the swing adjustment mechanism, thus ensuring smooth operation of the swing adjustment mechanism. In other words, this enables the smooth implementation of a function by which the force of pressing against the frictional braking face is adjusted for the lining members relative to each other. Also, the above configuration eliminates the need for a pivoting support mechanism such as that disclosed in Japanese Patent No. 4090499. In other words, this eliminates the need for difficult spherical surface processing for processing sliding spherical surfaces. This enables reducing the number of processing steps.

According to the above configuration, it is possible to provide a disc brake pad that can suppress the formation of heat spots on a disc and suppress the formation of heat cracks, as well as can reduce the number of processing steps and can enable the smooth implementation of a function by which the force of pressing against the frictional braking face is adjusted for the lining members relative to each other.

Furthermore, according to this configuration, the swing adjustment mechanism is provided with a function by which the position in the direction of pressing against the frictional braking face is adjusted for the lining members relative to each other by the first swing adjustment members, as well as a function by which this position in the pressing direction is adjusted for the first swing adjustment members relative to each other by the second swing adjustment member. For this reason, the function for adjusting the pressing positions of the lining members relative to each other is made even more smooth and flexible with the swinging operation of the first swing adjustment members and the swinging operation of the second swing adjustment member.

Also, in the disc brake pad according to an aspect of the present invention, it is preferable that the first swing adjustment member is disposed such that a lining member is supported at each of two end portions of the first swing adjustment member, and the swing adjustment mechanism supports the first swing adjustment member at an intermediate position between two end portions of the first swing adjustment member.

According to this configuration, the first swing adjustment member is configured in the manner of a seesaw that is supported at an intermediate position and swingably supports a lining member at each of two end portions. This enables realizing a simple configuration for a function by which the position in the direction of pressing against the frictional braking face is adjusted for the lining members relative to each other by swinging.

Also, in the disc brake pad according to an aspect of the present invention, it is preferable that the first swing adjustment member is disposed such that a lengthwise direction thereof extends along a direction parallel to a radial direction of the disc centered about a rotational centerline of the disc, or along a direction parallel to a direction tangential to a circle centered about the rotational centerline, and disposed such that a lining member is supported at each of two lengthwise end portions of the first swing adjustment member.

According to this configuration, multiple first swing adjustment members, each of which supports multiple lining members arranged along the radial direction or the rotation direction of the disc, are arranged along the radial direction or the rotation direction of the disc. This enables multiple lining members and the multiple first swing adjustment members that support them to be efficiently arranged densely along the frictional braking face. This enables realizing even smoother implementation of the function by which the force of pressing against the frictional braking face is adjusted for the many lining members relative to each other.

Also, in the disc brake pad according to an aspect of the present invention, it is preferable that the load supporting member is provided as a member that includes a flat plate-shaped portion provided with a plurality of through-holes or recessions into which the plurality of lining members are partially inserted, and the lining members come into contact with edge portions of the through-holes or edge portions of the recessions.

According to this configuration, the load supporting member that supports the load generated along the direction parallel to the frictional braking face due to frictional braking force can be easily formed with a simple structure having the flat plate-shaped portion provided with multiple through-holes or recessions whose edge portions come into contact with the lining members.

According to this configuration, the swing adjustment mechanism is provided with a function by which the position in the direction of pressing against the frictional braking face is adjusted for the lining members relative to each other by the first swing adjustment members, as well as a function by which this position in the pressing direction is adjusted for the first swing adjustment members relative to each other by the second swing adjustment member. For this reason, the function for adjusting the pressing positions of the lining members relative to each other is made even more smooth and flexible with the swinging operation of the first swing adjustment members and the swinging operation of the second swing adjustment member.

Also, in the disc brake pad according to an aspect of the present invention, it is preferable that the lining support portion is provided with a base portion that supports the plurality of lining members, and a load transfer portion that is provided to be integrated with or fixed to the base portion and can transfer a load from the caliper body to the base portion, and the load transfer portion is provided at a position on the base portion at which, when surface pressure is generated between the plurality of lining members and the frictional braking face when the plurality of lining members are pressed against the frictional braking face, a load that generates the surface pressure can act on the base portion such that the magnitude of the surface pressure is inversely proportional to the magnitude of the distance from the position of the rotational centerline of the disc in the radial direction of the disc.

Through thorough theoretical consideration and repeated experimentation, the inventors of the present invention thoroughly verified a configuration that can suppress the formation of heat spots on a disc and can enable the smooth implementation of a function by which the force of pressing against a frictional braking face is adjusted for multiple lining members relative to each other, and additionally a configuration that can suppress the occurrence of partial wear in a disc brake pad. As a result of such intense research, the inventors of the present invention arrived at the ability to realize a disc brake pad that, due to satisfying both of the following first and second conditions, can suppress the occurrence of partial wear.

The first condition is that the temperature of the frictional braking face of the disc is equalized in the braking operation in which the lining members of the disc brake pad are pressed against the frictional braking face of the disc. If unevenness of the temperature of the frictional braking face of the disc occurs, wear of the lining member will be promoted in places where the temperature is high, and partial wear will occur. Accordingly, the satisfaction of the first condition suppresses the occurrence of partial wear of the lining member resulting from unevenness in the temperature of the frictional braking face of the disc.

Also, the second condition is that the braking energy per unit area of the lining members pressed against the frictional braking face is equalized in the braking operation. The amount of wear of the lining members can be expressed as a function of the braking energy of the lining members that is pressed against the frictional braking face. Accordingly, if the second condition is satisfied, partial wear due to unevenness in the braking energy per unit area of the lining member is suppressed, and the amount of wear of the lining members is equalized.

In order for the first condition to be satisfied, the value of the heat flux of the frictional braking face of the disc needs to be equalized. Since the disc is configured as a rotating circular flat plate-shaped member, when considering a ring-like element whose dimension in the radial direction of the disc is the unit dimension, the area of this ring-like element is proportional to the radius thereof. Accordingly, in order to equalize the heat flux of the entire friction face, the frictional heat per unit time of the ring-like element needs to be proportional to the radius. On the other hand, the frictional heat (heat flow) of this element is proportional to the pressing load that the disc brake pad is subjected to and the slipping velocity. Also, since the slipping velocity of the ring-like element is proportional to the radius thereof, the frictional heat of this element is proportional to the load and the radius. Based on the above-described relationships, in order for the first condition to be satisfied, regardless of the position of the ring-like element in the radial direction of the disc, the load that the ring-like element is subjected to from the disc brake pad needs to be a constant value that is determined according to the value of the uniform heat flux of the frictional braking face, regardless of the radius of the ring-like element.

Also, in order for the second condition to be satisfied, the value of the braking energy of the disc brake pad per unit time per unit area needs to be equalized. Since the braking energy of the element on the lining member side that corresponds to the above-described ring-like element of the disc is proportional to the radius, in order to equalize the braking energy, it is necessary for the area of the lining member-side element to be proportional to the radius. Furthermore, the value obtained by dividing the load that the ring-like element is subjected to from the disc brake pad by the area of the lining member-side element, which is obtained as described above, is the surface pressure generated at the lining member-side element. For this reason, the surface pressure is inversely proportional to the radius of the lining member-side element.

In the disc brake pad having the above configuration, the load transfer portion is provided at a position on the base portion at which the load that generates surface pressure, which is surface pressure generated between the frictional braking face and the lining members, can act on the base portion in a manner such that the magnitude of the surface pressure is inversely proportional to the magnitude of the distance from the position of the rotational centerline of the disc in the radial direction of the disc. For this reason, according to the disc brake pad having the above configuration, the first condition and the second condition are satisfied. Accordingly, this configuration enables suppressing the occurrence of partial wear of the disc brake pad. Note that in the disc brake pad having the above configuration, a certain initial wear state occurs in the initial use state when use is started. However, according to the disc brake having the above configuration, the occurrence of partial wear is suppressed in the state after the initial wear state has passed and the stable use state has been entered.

Therefore, according to this configuration, it is possible to provide a disc brake pad that can suppress the occurrence of partial wear.

Also, in the disc brake pad according to an aspect of the present invention, it is preferable that the plurality of lining members can be disposed so as to spread out over a region enclosed by: an outer circumferential arc that extends in an arc-like manner along a circle centered about the rotational centerline and defines an outer edge portion of the region in the radial direction of the disc, an inner circumferential arc that extends in an arc-like manner along a circle centered about the rotational centerline and defines an inner edge portion of the region in the radial direction of the disc, and a pair of straight lines that define edge portions of the region on both sides of the outer circumferential arc and the inner circumferential arc in a circumferential direction centered about the rotational centerline, and that extend linearly along the radial direction of the disc.

According to this configuration, when the disc brake pad is to be used in the disc brake device, multiple lining members are disposed so as to spread out over a region enclosed by an outer circumferential arc and an inner circumferential arc (which are arranged concentrically with the rotational centerline of the disc), and a pair of straight lines that extend along the radial direction of the disc on respective sides of the arcs. This enables realizing the disc brake pad for satisfying the above-described first condition and second condition with a simpler structure.

Also, in the disc brake pad according to an aspect of the present invention, it is preferable that the first swing adjustment member supports the swingably supported plurality of lining members at a position at which, when surface pressure is generated between the plurality of lining members and the frictional braking face when the plurality of lining members are pressed against the frictional braking face, a load that generates the surface pressure can act on the lining members such that the magnitude of the surface pressure is inversely proportional to the magnitude of the distance from the position of the rotational centerline of the disc in the radial direction of the disc.

According to this configuration, the above-described first condition and second condition are satisfied for the lining members as a whole in the disc brake pad, and the above-described first condition and second condition are satisfied for each of the lining members as well. This efficiently suppresses the occurrence of partial wear in individual lining members as well.

Also, in the disc brake pad according to an aspect of the present invention, it is preferable that the first swing adjustment member is disposed such that a lining member is supported at each of two end portions of the first swing adjustment member, the swing adjustment mechanism supports the first swing adjustment member at an intermediate position between two end portions of the first swing adjustment member, the first swing adjustment member is disposed such that a lengthwise direction thereof extends along a direction parallel to a radial direction of the disc centered about a rotational centerline of the disc, and out of the lining members supported to the two end portions of the first swing adjustment member, one lining member arranged on the outer side in the radial direction of the disc is provided as an outer lining member, and another lining member arranged on the inner side in the radial direction of the disc is provided as an inner lining member. It is also preferable that in the swing adjustment mechanism of this disc brake pad, a ratio of the distance in the lengthwise direction of the first swing adjustment member from a first support position, being the position where the first swing adjustment member is supported in the swing adjustment mechanism, to a position where the outer lining member is supported to the first swing adjustment member, to the distance in the lengthwise direction of the first swing adjustment member from the first support position to a position where the inner lining member is supported to the first swing adjustment member, is the inverse of a ratio of the magnitude of the load in the pressing direction generated between the outer lining member and the disc, to the magnitude of the load in the pressing direction generated between the inner lining member and the disc.

According to this configuration, for each of the first swing adjustment members disposed so as to extend along the direction parallel to the radial direction of the disc, the ratio of the distances from the first support position to the respective positions where the outer and inner lining members are supported is set to the inverse of the ratio of the magnitudes of the loads acting on the outer and inner lining members. For this reason, even if the magnitudes of the loads acting on the outer and inner lining members are different from each other, the force of pressing against the frictional braking face is adjusted for the outer and inner lining members relative to each other according to the differing load magnitudes. Thus, the above configuration can be further applied to the previously-described configuration in which the occurrence of partial wear is suppressed in individual lining members. Accordingly, it is possible to suppress the occurrence of partial wear in individual lining members, and to relax the constraints regarding the conditions for the load generated on the lining members. This enables improving the degree of freedom in the design of the disc brake pad that enables adjustment of the force of pressing against the frictional braking face for the lining members relative to each other and also enables suppressing the occurrence of partial wear in individual lining members.

Also, in the disc brake pad according to an aspect of the present invention, it is preferable that the a second swing adjustment member supports the plurality of first swing adjustment members such that a position in the pressing direction can be adjusted for the plurality of first swing adjustment members relative to each other by swinging of the second swing adjustment member, the first swing adjustment member is disposed such that a lining member is supported at each of two end portions of the first swing adjustment member, the second swing adjustment member is disposed such that a first swing adjustment member is supported at each of two end portions of the second swing adjustment member, the swing adjustment mechanism supports each of the first swing adjustment members at an intermediate position between two end portions of the first swing adjustment member, and swingably supports the second swing adjustment member at an intermediate position between two end portions of the second swing adjustment member, the first swing adjustment members supported to the two end portions of the second swing adjustment member are each disposed such that a lengthwise direction thereof extends along a direction parallel to a direction tangential to a circle centered about the rotational centerline of the disc, the second swing adjustment member is disposed such that a lengthwise direction thereof extends along a direction parallel to the radial direction of the disc centered about the rotational centerline of the disc, and out of the first swing adjustment members supported to the two end portions of the second swing adjustment member, one first swing adjustment member arranged on the outer side in the radial direction of the disc is defined as an outer swing adjustment member, and another first swing adjustment member arranged on the inner side in the radial direction of the disc is defined as an inner swing adjustment member. It is also preferable that in the swing adjustment mechanism of this disc brake pad, a ratio of the distance in the lengthwise direction of the second swing adjustment member from a second support position, being the position where the second swing adjustment member is supported in the swing adjustment mechanism, to a position where the outer swing adjustment member is supported to the second swing adjustment member, to the distance in the lengthwise direction of the second swing adjustment member from the second support position to a position where the inner swing adjustment member is supported to the second swing adjustment member, is the inverse of a ratio of the magnitude of the load in the pressing direction generated between the disc and the plurality of lining members supported to the outer swing adjustment member, to the magnitude of the load in the pressing direction generated between the disc and the plurality of lining members supported to the inner swing adjustment member.

According to this configuration, for the second swing adjustment member disposed so as to extend along the direction parallel to the radial direction of the disc, the ratio of the distances from the second support position to the respective positions where the outer and inner swing adjustment members are supported is set to the inverse of the ratio of the magnitudes of the loads acting on the lining members supported to the outer swing adjustment member and the lining members supported to the inner swing adjustment member. For this reason, even if the magnitude of the load acting on the lining members supported to the outer swing adjustment member is different from the magnitude of the load acting on the lining members supported to the inner swing adjustment member, the force of pressing against the frictional braking face is adjusted for the outer and inner swing adjustment members relative to each other according to the differing load magnitudes. Thus, the above configuration can be further applied to the previously-described configuration in which the occurrence of partial wear is suppressed in individual lining members. Accordingly, in the disc brake pad that includes the swing adjustment mechanism provided with the second swing adjustment member that supports the first swing adjustment members, it is possible to suppress the occurrence of partial wear in individual lining members, and to relax the constraints regarding the conditions for the load generated on the lining members. This enables improving the degree of freedom in the design of the disc brake pad that enables adjustment of the force of pressing against the frictional braking face for the lining members relative to each other and also enables suppressing the occurrence of partial wear in individual lining members.

A brake caliper device according to an aspect of the present invention for achieving the above-described objects is a brake caliper device according to claim 10.

This configuration can achieve effects similar to those of the disc brake pad according to the above-described aspect of the present invention. In other words, according to this configuration, it is possible to provide a brake caliper device that can suppress the formation of heat spots on a disc and suppress the formation of heat cracks, as well as can reduce the number of processing steps and can enable the smooth implementation of a function by which the force of pressing against the frictional braking face is adjusted for the lining members relative to each other.

According to the present invention, it is possible to provide a disc brake pad that can suppress the formation of heat spots on a disc and suppress the formation of heat cracks, as well as can reduce the number of processing steps and can enable the smooth implementation of a function by which the force of pressing against the frictional braking face is adjusted for the lining members relative to each other. It is also possible to provide a brake caliper device that includes this disc brake pad.

BRIEF DESCRIPTION OF THE DRAWINGS

FIG. 1 is a side view of a disc brake device provided with a brake caliper device and a disc brake pad according to an embodiment of the present invention;
FIG. 2 is a plan view of the disc brake device shown in FIG. 1;
FIG. 3 is a diagram showing the disc brake pad shown in FIG. 1, as viewed in the axle direction;
FIG. 4 is a diagram showing the disc brake pad shown in FIG. 3, as viewed in a direction parallel to the disc;
FIG. 5 is an exploded perspective view of the disc brake pad shown in FIG. 4;
FIG. 6 is a diagram showing the arrangement of lining members on the disc brake pad shown in FIG. 5;
FIG. 7 is a perspective view of a portion of the lining members on the disc brake pad shown in FIG. 5;
FIG. 8 is a diagram schematically showing a region in which the lining members are disposed on the disc brake pad shown in FIG. 1;
FIG. 9 is a perspective view of a swing adjustment mechanism in the disc brake pad shown in FIG. 5;
FIG. 10 is a diagram showing a cross-section of a portion of the disc brake pad shown in FIG 4.
FIG. 11 shows the swing adjustment mechanism shown in FIG. 9, as viewed in the axle direction;
FIG. 12 is a diagram showing an analytical model for describing effects of the disc brake pad shown in FIG. 1;
FIG. 13 is a diagram showing an analytical model for describing effects of the disc brake pad shown in FIG. 1;
FIG. 14 is a diagram showing an analytical model for obtaining the load center position of the disc brake pad shown in FIG. 1;
FIG. 15 is a diagram for describing a swing adjustment mechanism according to a variation;
FIG. 16 is a diagram for describing a swing adjustment mechanism according to another variation; and
FIG. 17 is a diagram for describing the swing adjustment mechanism according to the other variation.

EXEMPLARY EMBODIMENT

An embodiment for implementing the present invention will be described below with reference to the drawings. This embodiment of the present invention is widely applicable to a disc brake pad that is used in a disc brake device to be disposed in a vehicle and that can be pressed against a disc disposed so as to rotate along with an axle or a wheel in the vehicle, and also to a brake caliper device that includes this disc brake pad. Note that the following description takes the example of the case where the disc brake pad and the brake caliper device of the present embodiment are for use in a railroad vehicle.

Disc brake device

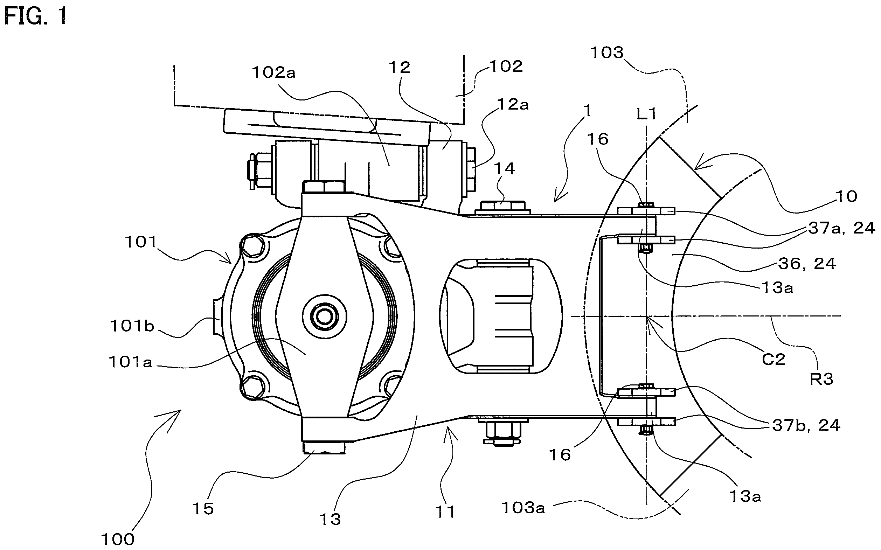

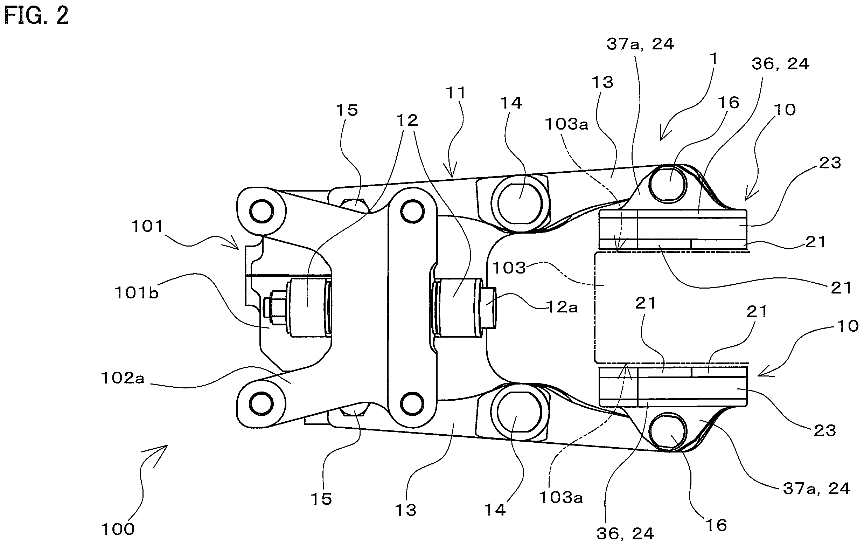

FIG. 1 is a side view of a disc brake device 100 that is provided with a brake caliper device 1 and a disc brake pad 10 according to an embodiment of the present invention, the disc brake device 100 being viewed in the axle direction. Also, FIG. 2 is a plan view of the disc brake device 100 shown in FIG. 1, as viewed from above. Note that the brake caliper device 1 of the present embodiment is configured so as to include the disc brake pad 10 of the present embodiment. Also, the disc brake device 100 is configured so as to include the brake caliper device 1.

The disc brake device 100 is disposed in a railroad vehicle, for example. FIG. 1 shows the state in which the disc brake device 100 is disposed on a vehicle body 102 (indicated by dashed double-dotted lines) serving as one part of the railroad vehicle. As shown in FIGS. 1 and 2, the disc brake device 100 is configured so as to include a brake cylinder device 101, and the brake caliper device 1.

The brake cylinder device 101 is configured as a device that is actuated by hydraulic fluid so as to move a rod (not shown) and output braking force from a brake output portion 101a that moves along with the rod. Note that when a braking operation is to be performed through the brake cylinder device 101 outputting braking force, the brake output portion 101a operates so as to extend away from a cylinder body 101b of the brake cylinder device 101. On the other hand, when the braking operation performed with the braking force output from the brake cylinder device 101 is to be canceled, the brake output portion 101a operates so as to retract towards the cylinder body 101b.

Brake caliper device

The brake caliper device 1 used in the disc brake device 100 is configured so as to include a pair of disc brake pads (10, 10), a caliper body 11 that is equipped with the brake cylinder device 101 and is attached so as to be able to rotate in the vehicle rolling rotation direction relative to the vehicle body 102, and the like. Note that the vehicle rolling rotation direction refers to the rotation direction whose rotation axis direction is the traveling direction of the vehicle. The brake caliper device 1 is configured so as to generate braking force by sandwiching a disc 103 with the pair of disc brake pads (10, 10) due to being driven by the brake cylinder device 101. For this reason, the brake caliper device 1 is provided as a device that can press the disc brake pads 10 against the disc 103.

Note that the disc 103 is disposed so as to rotate along with a wheel (not shown) or an axle (not shown) of that wheel of the railroad vehicle. Also, the disc 103 is formed in the shape of a circular plate whose two faces are frictional braking faces (103a, 103a) formed so as to spread out in a direction perpendicular to the rotational centerline of the disc 103. Note that the rotational centerline of the disc 103 conforms to the central axis line of the axle of the wheel of the railroad vehicle. Due to the operation of the brake cylinder device 101, the pair of disc brake pads (10, 10) of the brake caliper device 1 are pressed against the frictional braking faces (103a, 103a) so as to sandwich the disc 103, from both sides, along a direction parallel to the rotational centerline direction of the disc 103.

The caliper body 11 is configured so as to include a coupling member 12, a pair of brake levers (13, 13), a pair of fulcrum shafts (14, 14), a pair of cylinder support pins (15, 15), multiple swing pins 16, and the like. Note that in the present embodiment, four swing pins 16 are provided, two swing pins (16, 16) being provided in correspondence with each brake lever 13.

A bracket 102a is fixed to the bottom face of the vehicle body 102, and the coupling member 12 is attached to the bracket 102a via a swing pin 12a so as to be able to swing about an axis parallel to the vehicle traveling direction. The pair of brake levers (13, 13) are attached so as to be able to swing relative to the coupling member 12, in a substantially symmetrical manner, via the pair of fulcrum shafts (14, 14). When viewed from a direction parallel to the rotational centerline direction of the disc 103, the fulcrum shafts 14 are disposed so as to extend in a direction perpendicular to the axial direction of the swing pin 12a.

The pair of brake levers (13, 13) are disposed so as to extend along a direction substantially parallel to the swing pin 12a. Also, the pair of brake levers (13, 13) each have a first end side that is attached to the brake cylinder device 101 via a respective one of the pair of cylinder support pins (15, 15), and are configured such that the first end sides are driven by the brake cylinder device 101.

Note that the first end sides of the brake levers (13, 13) are attached so as to be able to swing relative to end portions of the brake cylinder device 101 via the cylinder support pins 15. Also, either one of the first end sides of the pair of brake levers (13, 13) is coupled with the brake output portion 101a. The other one of the first end sides of the pair of brake levers (13, 13) is coupled to an end portion of the cylinder body 101b that is on the side opposite to the brake output portion 101a side.

Also, second end sides of the pair of brake levers (13, 13), which are the end sides opposite to the first end sides attached to the brake cylinder device 101 with the pair of fulcrum shafts (14, 14) therebetween, are attached to the pair of disc brake pads (10, 10). Also, the second end sides of the pair of brake levers (13, 13) are attached to the pair of disc brake pads (10, 10) via multiple swing pins (16, 16). Note that the disc brake pads 10 are attached so as to be able to swing relative to the second end sides of the brake levers 13 via the pairs of swing pins (16, 16). Also, the swing pins 16 are disposed so as to extend in a direction parallel to the fulcrum shafts 14.

In the disc brake device 100 provided with the above-described brake caliper device 1, due to the operation of the brake cylinder device 101, the brake output portion 101a operates so as to extend away from the cylinder body 101b (operates in a direction of moving away from the cylinder body 101b) or so as to retract towards the cylinder body 101b (operates in the direction of moving toward the cylinder body 101b). Accordingly, the pair of brake levers (13, 13) are driven such that the portions thereof that are coupled to the cylinder support pins 15 move away from each other or move toward each other.

Due to being driven as described above, the brake levers 13 of the disc brake device 100 operate so as to swing about the fulcrum shafts 14. Accordingly, the pair of disc brake pads (10, 10), which are driven along with the pair of brake levers (13, 13), operate so as to sandwich the disc 103.

Also, when the above-described operations are performed, one of the pair of disc brake pads 10 attached to one of the brake levers (13, 13) comes into contact with one of the frictional braking faces 103a of the disc 103 first, for example. The other brake lever 13 then presses the other disc brake pad 10 against the other frictional braking face 103a of the disc 103 using reactive force applied by the one disc brake pad 10 that came into contact with the one frictional braking face 103a. Accordingly, the disc 103 is sandwiched by the pair of disc brake pads (10, 10), and thus frictional braking force is generated between the disc brake pads (10, 10) and the frictional braking faces (103a, 103a). The rotation of the disc 103 is braked by this frictional braking force, thus braking the rotation of the wheel of the railroad vehicle that is provided coaxially with the disc 103.

Disc brake pad

Next, the disc brake pads 10 according to an embodiment of the present invention will be described in detail. As previously mentioned, the disc brake pads 10 are used in the disc brake device 100, and are provided as mechanisms that can be pressed against the disc 103. Also, the pair of disc brake pads (10, 10) of the brake caliper device 1 are attached to the pair of brake levers (13, 13) of the caliper body 11.

The configurations of the pair of disc brake pads (10, 10) are similar to each other. For this reason, one of the disc brake pads 10 will be described in the following description, and a description will not be given for the other disc brake pad 10. Note that when the pair of disc brake pads (10, 10) are disposed on respective sides of the disc 103, they are disposed so as be in an arrangement that is symmetrical about the disc 103.

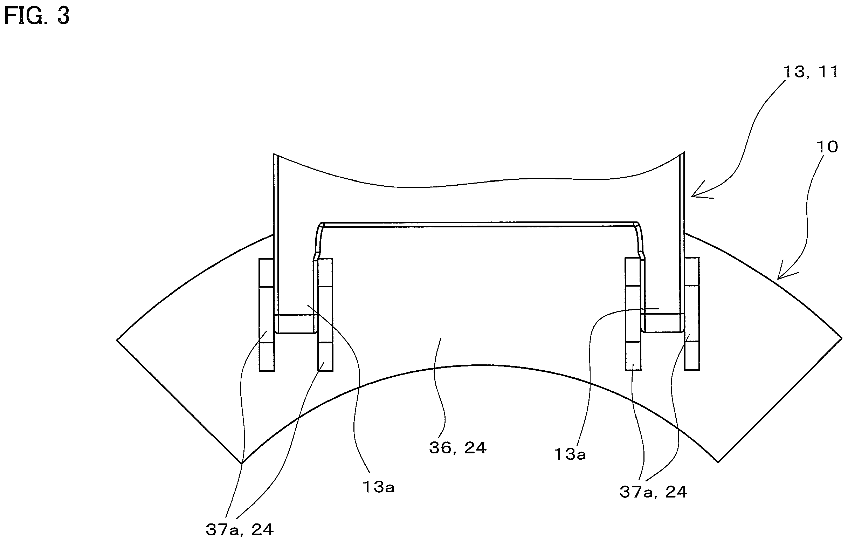

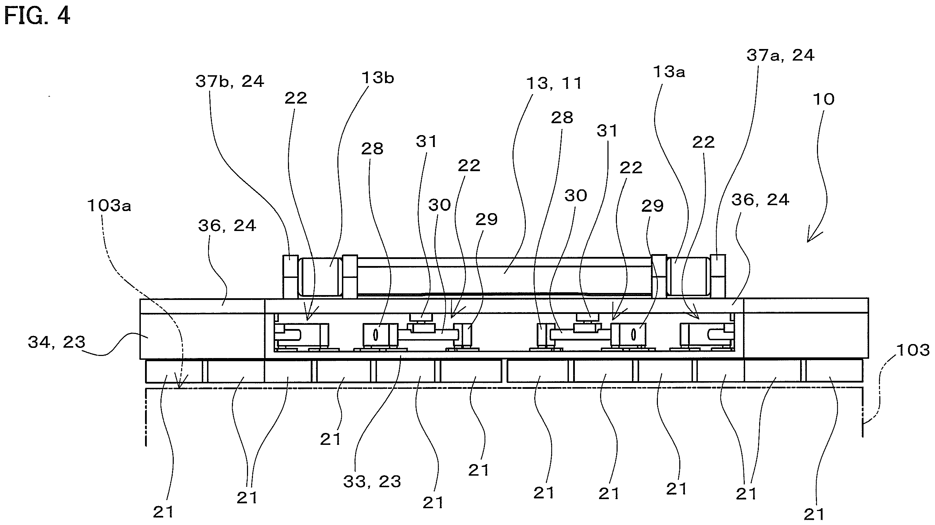

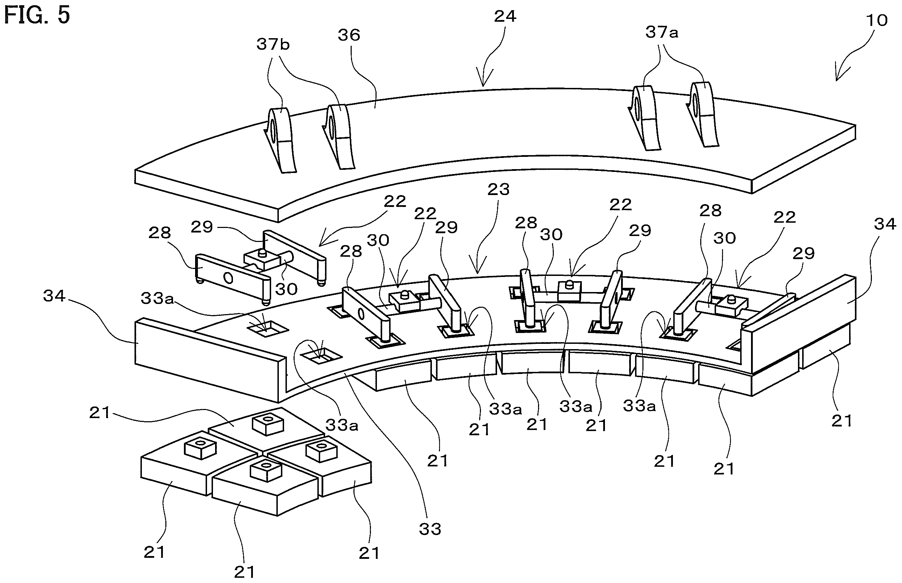

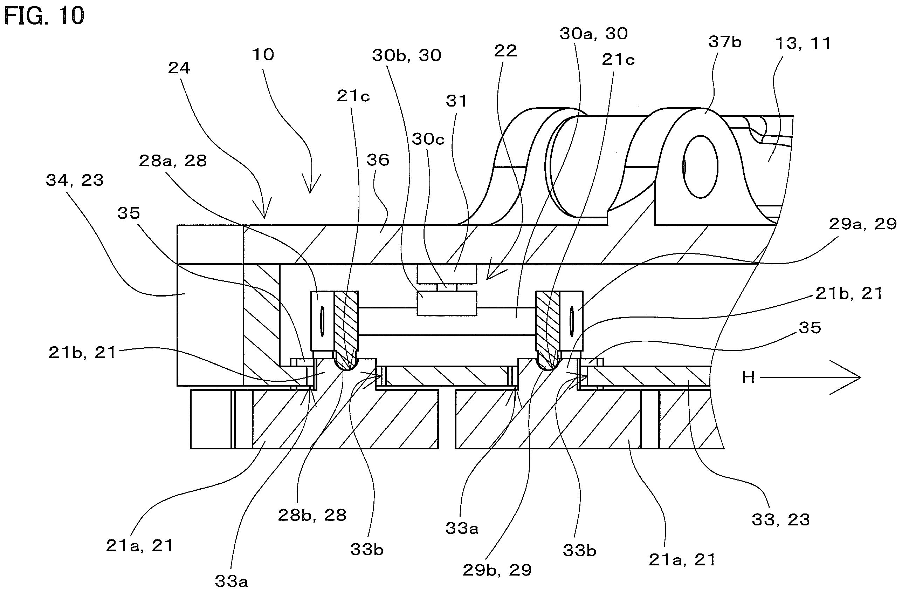

FIG. 3 is a diagram showing one disc brake pad 10 attached to the brake caliper device 1 of the disc brake device 100 disposed in a railroad vehicle, as viewed in the axle direction of a wheel of the railroad vehicle. FIG. 4 shows the disc brake pad 10 shown in FIG. 3, as viewed in a direction parallel to the disc 103. FIG. 5 is an exploded perspective view of the disc brake pad 10 shown in FIG. 4. Note that FIGS. 3 and 4 show only a portion of the caliper body 11, and the swing pins 16 are not shown (the same follows for later-described FIG. 10 as well). Also, FIG. 5 shows only the disc brake pad 10.

The disc brake pad 10 shown in FIGS. 1 to 5 is configured so as to include multiple lining members 21, multiple swing adjustment mechanisms 22, a load supporting member 23, a lining support portion 24, and the like. Note that in FIG. 5, only one swing adjustment mechanism 22 among the multiple swing adjustment mechanisms 22 is shown at a position separated from the load supporting member 23. Also, in FIG. 5, the four lining members 21 that correspond to the aforementioned one swing adjustment mechanism 22 are shown at positions separated from the load supporting member 23.

As shown in FIGS. 4 and 5, multiple lining members 21 are provided. Each lining member 21 is provided as a member that can press against the frictional braking face 103a of the disc 103. Also, each lining member 21 is formed from an organic material, a sintered metal material, or the like.

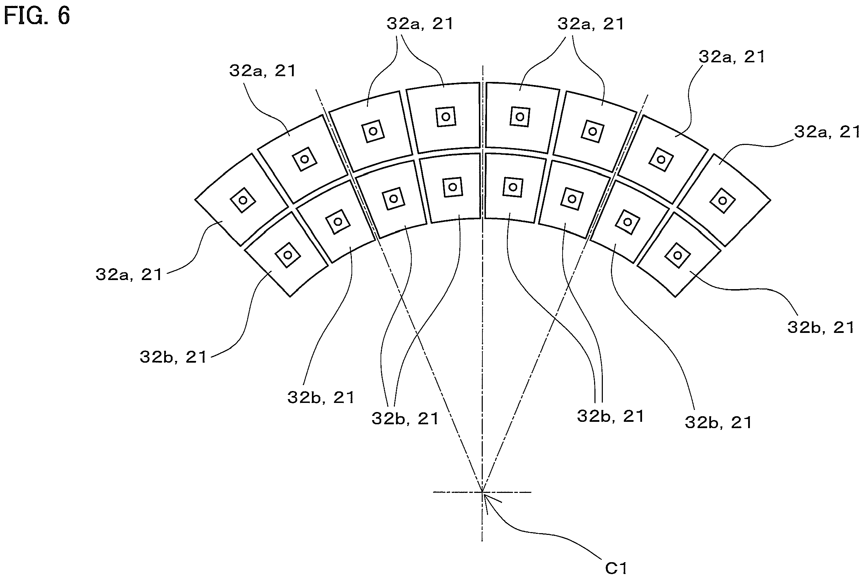

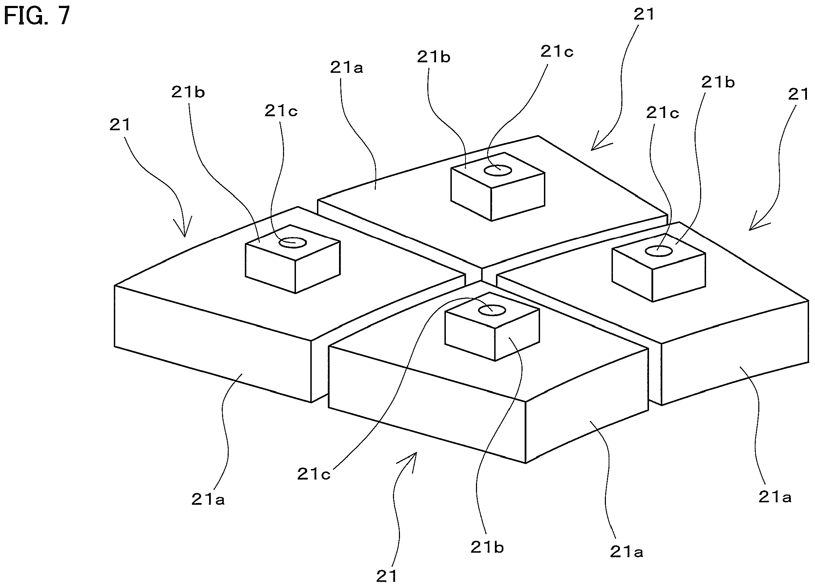

FIG. 6 is a diagram showing the arrangement of the lining members 21 shown in FIG. 5. Note that FIG. 6 shows the lining members 21 as viewed from the axle direction of a wheel of the railroad vehicle. Also, FIG. 7 is a perspective view of a portion of the lining members 21 shown in FIG. 5.

As shown in FIGS. 4 to 7, the lining members 21 are arranged so as to oppose the frictional braking face 103a of the disc 103. Also, the lining members 21 are arranged along a plane parallel to the frictional braking face 103a of the disc 103.

Also, the lining members 21 are arranged so as to be aligned in an arc-like manner along a circle centered about a rotational centerline C1 of the disc 103, and be aligned along directions parallel to the radial direction of the disc 103 as well. Note that the rotational centerline C1 is shown as the intersection between dashed dotted lines in FIG. 6. Also, in FIG. 6, several (three examples in FIG. 6) of the directions parallel to the radial direction of the disc 103 are shown by dashed dotted lines that extend radially from the rotational centerline C1. Also, the present embodiment describes the example of a disc brake pad 10 in which the lining members 21 are aligned in eight columns along the circle centered about the rotational centerline C1, and aligned in two rows along directions parallel to the radial direction of the disc 103.

Also, each lining member 21 is configured so as to include a body portion 21a and a contact portion 21b that are formed so as to be integrated with each other. The body portion 21a is provided as a plate-shaped portion and has a face formed so as to oppose the frictional braking face 103a of the disc 103 and be pressed against the frictional braking face 103a. The outer shape of the flat portion that spreads out in a plate-like manner on the body portion 21a is defined by four ridge lines that extend so as to define a closed region. The first ridge line is configured as an arc-like portion arranged on the outer side in the radial direction of the disc 103. The second ridge line is configured as an arc-like portion arranged on the inner side in the radial direction of the disc 103. The third and fourth ridge lines are configured as a pair of straight line portions that extend along directions parallel to the radial direction of the disc 103 and connect the two arc-like portions.

The contact portion 21b is provided as a portion that comes into contact with and is supported to the later-described swing adjustment mechanism 22. The contact portion 21b is provided as a portion that protrudes from the body portion 21a in a substantially cuboid shape. Also, the contact portion 21b is provided so as to be integrated with the body portion 21a on the face arranged on the opposite side of the face that is pressed against the frictional braking face 103a. The tip portion of the contact portion 21b that protrudes from the body portion 21a is provided with a recession hole 21c. The present embodiment describes the example where the recession hole 21c is provided as a hole that is recessed in the shape of a hemispherical face. As will be described later, the lining member 21 is supported to the swing adjustment mechanism 22 due to the swing adjustment mechanism 22 coming into contact with the interior of the recession hole 21c of the contact portion 21b.

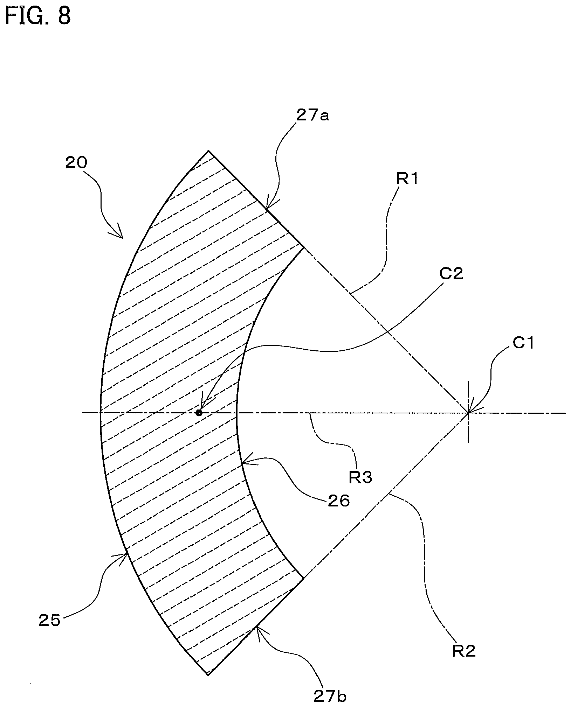

FIG. 8 is a diagram schematically showing a lining provision region 20, which is the region where the lining members 21 of the disc brake pad 10 are provided along the plane parallel to the frictional braking face 103a of the disc 103. The lining provision region 20 that spreads out along the plane parallel to the frictional braking face 103a and has the lining members 21 provided thereon has a peripheral portion configured by an outer circumferential arc 25, an inner circumferential arc 26, and a pair of straight lines (27a, 27b).

One end side of the outer circumferential arc 25 is continuous with the straight line 27a via a curved portion, and the other end side is continuous with the straight line 27b via a curved portion. Also, one end side of the inner circumferential arc 26 is continuous with the straight line 27a via a curved portion, and the other end side is continuous with the straight line 27b via a curved portion. Accordingly, the peripheral portion of the lining provision region 20 is configured such that a closed region making up one revolution is demarcated in a continuous manner in the order of the outer circumferential arc 25, the straight line 27a, the inner circumferential arc 26, and the straight line 27b. Also, due to having the above-described configuration, the lining members 21 disposed in the lining provision region 20 are configured so as to be able to be disposed so as to spread out over a region enclosed by the outer circumferential arc 25, the inner circumferential arc 26, and the pair of straight lines (27a, 27b).

The outer circumferential arc 25 is configured as a portion of the lining provision region 20 that extends in an arc-like manner along a circle centered about the rotational centerline C1 of the disc 103, and that defines an outer edge portion in the radial direction of the disc 103. Note that the rotational centerline C1 of the disc 103 is schematically shown in FIG. 8 as the intersection C1 of multiple dashed dotted lines. In FIG. 8, the rotational centerline C1 is configured as a line that passes through the point C1 in this figure and extends in a direction perpendicular to the drawing.

The inner circumferential arc 26 is configured as a portion of the lining provision region 20 that extends in an arc-like manner along a circle centered about the rotational centerline C1 of the disc 103, and that defines an inner edge portion in the radial direction of the disc 103. For this reason, in terms of the radial direction of the disc 103, the inner circumferential arc 26 is disposed more inward than the outer circumferential arc 25 is, that is to say, more toward the rotational centerline C1 than the outer circumferential arc 25 is.

The pair of straight lines (27a, 27b) are configured as portions of the lining provision region 20 that define edge portions on both sides of the outer circumferential arc 25 and the inner circumferential arc 26 in a circumferential direction centered about the rotational centerline C1 of the disc 103, and that extend linearly along the radial direction of the disc 103. Note that in FIG. 8, the straight line 27a is shown as a portion that extends along a radial direction R1 of the disc 103, and the straight line 27b is shown as a portion that extends along a radial direction R2 of the disc 103.

As shown in FIGS. 4 and 5, multiple swing adjustment mechanisms 22 are provided. The swing adjustment mechanisms 22 are each configured so as to support multiple lining members 21. The present embodiment describes the example of a disc brake pad 10 in which one swing adjustment mechanism 22 supports four lining members 22.

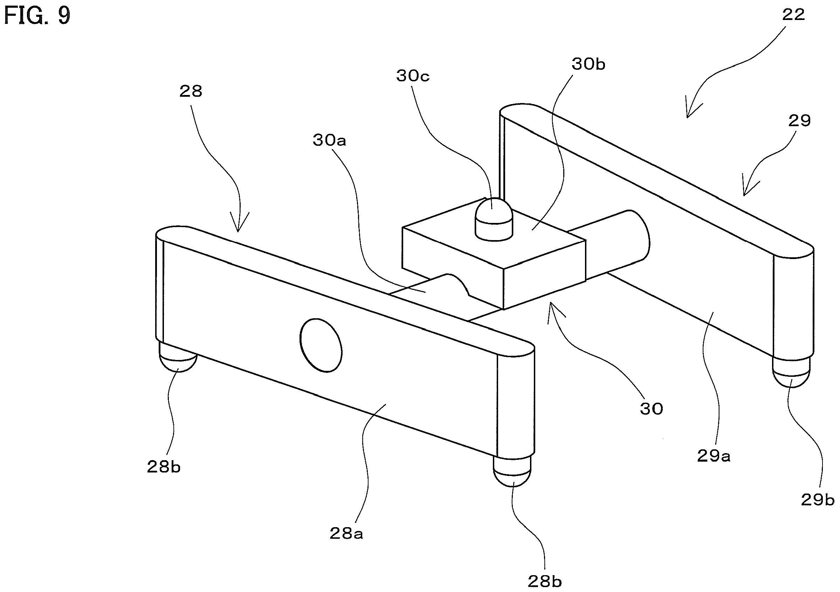

FIG. 9 is a perspective view of one swing adjustment mechanism 22. As shown in FIGS. 4, 5, and 9, the swing adjustment mechanism 22 is configured so as to include a pair of first swing adjustment members (28, 29), a second swing adjustment member 30, a receiving portion 31, and the like.

The first swing adjustment member 28 and the first swing adjustment member 29 are configured as similar members. The first swing adjustment member 28 is provided with a body portion 28a formed in the shape of a long and narrow plate, and a pair of protrusion portions (28b, 28b) provided as members that protrude from the body portion 28a in the shape of projections. The body portion 28a and the pair of protrusion portions (28b, 28b) are formed so as to be integrated with each other. Also, the pair of protrusion portions (28b, 28b) are provided as portions that protrude from the body portion 28a in the shape of projections in directions parallel to each other in the two lengthwise end portions of the body portion 28a. Note that the present embodiment describes the example where the end portion of each protrusion portion 28b is formed in the shape of a hemisphere.

Similarly to the first swing adjustment member 28, the first swing adjustment member 29 is also provided with a body portion 29a formed in the shape of a long and narrow plate, and a pair of protrusion portions (29b, 29b) provided as members that protrude from the body portion 29a in the shape of projections. The body portion 29a and the pair of protrusion portions (29b, 29b) are formed so as to be integrated with each other. Also, the pair of protrusion portions (29b, 29b) are provided as portions that protrude from the body portion 29a in the shape of projections in directions parallel to each other in the two lengthwise end portions of the body portion 29a. Note that the present embodiment describes the example where the end portion of each protrusion portion 29b is formed in the shape of a hemisphere.

The pair of protrusion portions (28b, 28b) of the first swing adjustment member 28 come into contact with the recession holes 21c of corresponding lining members 21 so as to be loosely fitted therein. Accordingly, the first swing adjustment member 28 is disposed so as to swingably support two lining members 21 by coming into contact with the lining members 21at the protrusion portions 28b. Similarly, the pair of protrusion portions (29b, 29b) of the first swing adjustment member 29 come into contact with the recession holes 21c of corresponding lining members 21 so as to be loosely fitted therein. Accordingly, the first swing adjustment member 29 is disposed so as to swingably support two lining members 21 by coming into contact with the lining members 21 at the protrusion portions 29b.

According to the above configuration, each first swing adjustment member (28, 29) is disposed so as to swingably support multiple (two in the present embodiment) lining members 21 in the disc brake pad 10. Also, the first swing adjustment members (28, 29) are disposed such that a lining member 21 is supported at each of two end portions of the first swing adjustment members (28, 29).

The second swing adjustment member 30 is disposed so as to support multiple (two in the present embodiment) first swing adjustment members (28, 29). Also, the second swing adjustment member 30 is provided with a shaft portion 30a formed in the shape of a long and narrow shaft, and a contact portion 30b that is fixed to the shaft portion 30a and comes into contact with the later-described receiving portion 31.

Two lengthwise end portions of the shaft portion 30a are coupled to the first swing adjustment members (28, 29). Specifically, the first swing adjustment member 28 is coupled to and supported to one lengthwise end portion of the shaft portion 30a, and the first swing adjustment member 29 is coupled to and supported to the other lengthwise end portion of the shaft portion 30a. One end portion of the second swing adjustment member 30 supports the first swing adjustment member 28 at an intermediate position between the two end portions of the first swing adjustment member 28. The other end portion of the second swing adjustment member 30 supports the first swing adjustment member 29 at an intermediate position between the two end portions of the first swing adjustment member 29. Note that as will be described later, the second swing adjustment member 30 is swingably supported in the swing adjustment mechanism 22. Accordingly, the swing adjustment mechanism 22 swingably supports the first swing adjustment members (28, 29) at intermediate positions between their two end portions.

Also, the first swing adjustment members (28, 29) are each coupled to the shaft portion 30a via a universal coupling structure (not shown) for example. The first swing adjustment members (28, 29) are coupled to the shaft portion 30a so as to be able to rotate in a rotation direction centered about the shaft axial direction of the shaft portion 30a. Note that a configuration is possible in which the first swing adjustment members (28, 29) are not coupled to the shaft portion 30a via a universal coupling structure. For example, the first swing adjustment members (28, 29) may be fixed to the shaft portion 30a.

The contact portion 30b is provided as a portion that comes into contact with and is supported to the later-described receiving portion 31 fixed to the lining support portion 24. The contact portion 30b is fixed to the shaft portion 30a in a lengthwise central portion of the shaft portion 30a. The contact portion 30b is provided with a protrusion portion 30c on the side that opposes the lining support portion 24, which is the side opposite to the side fixed to the shaft portion 30a. The protrusion portion 30c is provided as a portion that protrudes in the shape of a projection at a central position on the contact portion 30b that corresponds to a lengthwise central position of the shaft portion 30a. Note that the present embodiment describes the example where the end portion of the protrusion portion 30c is formed in the shape of a hemisphere.

FIG. 10 is a diagram showing a cross-section of a portion of the disc brake pad 10. Note that FIG. 10 shows a cross-section of the disc brake pad 10 taken along a plane parallel to a direction tangential to a circle centered about the rotational centerline C1. Also, the cross-section of the disc brake pad 10 in FIG. 10 includes one swing adjustment mechanism 22 arranged on one end portion side in a circumferential direction centered about the rotational centerline C1, and the vicinity of that mechanism. As shown in FIGS. 4 and 10, the protrusion portion 30c comes into contact with and is supported to the receiving portion 31 fixed to the lining support portion 24.

The receiving portion 31 is provided as a cuboid member, and is fixed to the face of the lining support portion 24 on the side that opposes the swing adjustment mechanism 22. Note that the receiving portion 31 may be formed so as to be integrated with the lining support portion 24. Also, the receiving portion 31 is provided with a recession hole (not shown) that comes into contact with the protrusion portion 30c. The recession hole of the receiving portion 31 is, for example, formed in a shape similar to that of the recession hole 21c of the contact portion 21b of the lining member 21, thus being provided as a hole recessed in the shape of a hemispherical face.

The protrusion portion 30c of the second swing adjustment member 30 comes into contact with the recession hole of the receiving portion 31 so as to be loosely fitted therein. In this way, the protrusion portion 30c comes into contact with the interior of the recession hole of the receiving portion 31 fixed to the lining support portion 24 so that the second swing adjustment member 30 is swingably supported to the lining support portion 24 via the receiving portion 31.

The first swing adjustment members (28, 29) that each swingably support multiple (two in the present embodiment) lining members 21 as described above are furthermore swingably supported to the swing adjustment mechanism 22. Accordingly, the swing adjustment mechanism 22 is configured so as to support the lining members 21 such that the position in the pressing direction can be adjusted for the lining members 21 relative to each other by the swinging of the first swing adjustment members (28, 29). Note that the aforementioned position in the pressing direction is the position in the pressing direction when the lining member 21 is pressed against the frictional braking face 103a in a direction perpendicular to the frictional braking face 103a.

Also, the second swing adjustment member 30 that supports multiple (two in the present embodiment) first swing adjustment members (28, 29) as previously described is swingably supported to the swing adjustment mechanism 22. Accordingly, the swing adjustment mechanism 22 is configured so as to support the first swing adjustment members (28, 29) such that the above-described position in the pressing direction can be adjusted for the first swing adjustment members (28, 29) relative to each other by the swinging of the second swing adjustment member 30.

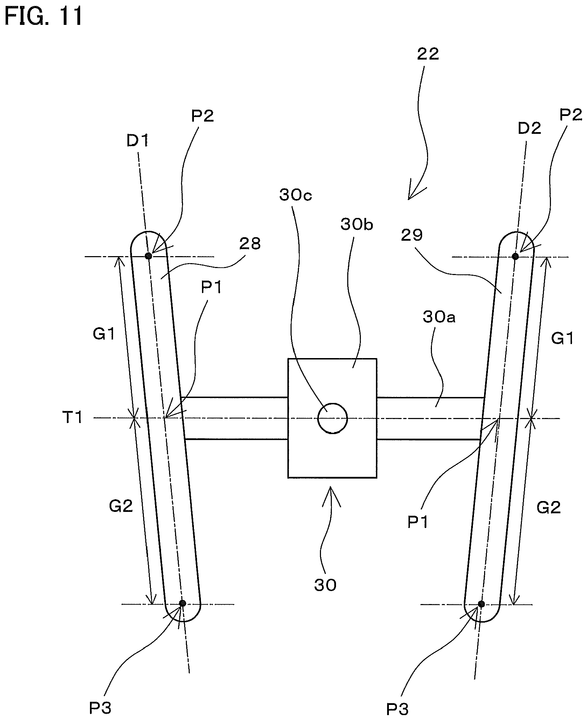

FIG. 11 shows one swing adjustment mechanism 22 as viewed in the axle direction of a wheel of the railroad vehicle. FIG. 11 shows the example of two directions D1 and D2 (directions indicated by dashed dotted lines D1 and D2 in FIG. 11) as directions parallel to the radial direction of the disc 103 centered about the rotational centerline C1 of the disc 103 (see FIGS. 6 and 8). Also, FIG. 11 shows the example of a direction T1 (direction indicated by dashed dotted line T1 in FIG. 11) as the direction parallel to the direction tangential to the circle centered about the rotational centerline C1 of the disc 103.

The first swing adjustment members (28, 29) are disposed in the swing adjustment mechanism 22 such that their lengthwise directions extend along a direction parallel to the radial direction of the disc 103 centered about the rotational centerline C1 of the disc 103. Specifically, the first swing adjustment member 28 is disposed so as to extend along the direction D1, and the first swing adjustment member 29 is disposed so as to extend along the direction D2. Also, the second swing adjustment member 30 is disposed in the swing adjustment mechanism 22 such that its lengthwise direction extends along the direction parallel to the direction tangential to the circle centered about the rotational centerline C1 of the disc 103. Specifically, the second swing adjustment member 30 is disposed so as to extend along the direction T1.

Also, in the swing adjustment mechanism 22, for each of the first swing adjustment members (28, 29), the ratio of the distances from the position of support to the second swing adjustment member 30 to the respective positions where the two lining members 21 are supported is set to a predetermined ratio, as will be described below. In the following description of the predetermined ratio, out of the lining members 21 supported to the two end portions of each of the first swing adjustment members (28, 29) as shown in FIG. 6, the one lining member 21 arranged on the outer side in the radial direction of the disc 103 is defined as the outer lining member 32a. Also, out of the lining members 21 supported to the two end portions of each of the first swing adjustment members (28, 29), the other lining member 21 arranged on the inner side in the radial direction of the disc 103 is defined as the inner lining member 32b. In other words, the first swing adjustment member 28 supports the outer lining member 32a with the end portion on the outer side in the radial direction of the disc 103, and supports the inner lining member 32b with the end portion on the inner side in the radial direction of the disc 103. Similarly, the first swing adjustment member 29 supports the outer lining member 32a with the end portion on the outer side in the radial direction of the disc 103, and supports the inner lining member 32b with the end portion on the inner side in the radial direction of the disc 103.

Also, in the following description of the predetermined ratio, as shown in FIG. 11, a distance G1 is defined as the distance in the lengthwise direction of the first swing adjustment member (28, 29) from a support position P1 (first support position in the present embodiment), which is the position where the first swing adjustment member (28, 29) is supported in the swing adjustment mechanism 22, to a position P2 where the outer lining member 32a is supported to the first swing adjustment member (28, 29). Also, a distance G2 is defined as the distance in the lengthwise direction of the first swing adjustment member (28, 29) from the support position P1 to a position P3 where the inner lining member 32b is supported to the first swing adjustment member (28, 29).

Note that in FIG. 11, the support position P1 on the first swing adjustment member 28 is shown by the intersection between the dashed dotted line indicating the direction D1 and the dashed dotted line indicating the direction T1. Similarly, the support position P1 on the first swing adjustment member 29 is shown by the intersection between the dashed dotted line indicating the direction D2 and the dashed dotted line indicating the direction T1. Also, in FIG. 11, the position P2 is shown by a point P2 indicated by a small circular mark, and the position P3 is shown by a point P3 indicated by a small circular mark.

The ratio between the distance G1 and the distance G2 in the swing adjustment mechanism 22 is set to the aforementioned predetermined ratio. Specifically, the ratio between the distance G1 and the distance G2 in the swing adjustment mechanism 22 is set to the inverse of the ratio of the magnitude of the load in the pressing direction generated between the outer lining member 32a and the disc 103 to the magnitude of the load in the pressing direction generated between the inner lining member 32b and the disc 103. In other words, letting magnitude P2 be the magnitude of the load in the pressing direction generated by the outer lining member 32a, and magnitude P3 be the magnitude of the load in the pressing direction generated by the inner lining member 32a, the ratio between the distance G1 and the distance G2 is set such that the relationship (distance G1) : (distance G2) = (magnitude P3) : (magnitude P2) holds.

The load supporting member 23 is provided as a member for supporting load that is generated along a direction parallel to the frictional braking face 103a due to frictional braking force generated between the disc 103 and the lining members 21. As shown in FIGS. 4, 5, and 10, the load supporting member 23 is configured so as to include a plate portion 33 and attachment wall portions 34. Note that in FIG. 10, arrow H indicates the acting direction of the load generated along the direction parallel to the frictional braking face 103a due to frictional braking force.

The plate portion 33 is provided as a plate-shaped portion of the load supporting member 23 that is formed such that the outer shape of the peripheral portion is similar to that of the previously-described lining provision region 20 (see FIG. 8). Also, the plate portion 33 is provided with multiple through-holes 33a that are formed so as to be substantially rectangular, and that receive insertion of portions of the lining members 21. More specifically, each through-hole 33a is arranged such that the contact portion 21b of a corresponding lining member 21 is inserted therein. When frictional braking force is generated between the disc 103 and the lining members 21, the lining members 21 come into contact with edge portions 33b of the through-holes 33a, which are portions that define the shape of the through-holes 33a. Accordingly, the load supporting member 23 is configured so as to support the load generated along the direction parallel to the frictional braking face 103a due to frictional braking force in the state of being in contact with the lining members 21.

Note that although not shown in FIGS. 5 to 7, fallout prevention portions 35 are provided on the contact portions 21b of the lining members 21 inserted into the through-holes 33a, as shown in FIG. 10. The fallout prevention portions 35 are attached to the contact portions 21b on the side of the through-hole 33a opposite to the body portion 21a side. The fallout prevention portions 35 are attached to the contact portions 21b so as to be able to engage with the load supporting member 23 in the portion surrounding the through-hole 33a. Accordingly, the lining members 21 are prevented from falling from the load supporting member 23 toward the disc 103.

The attachment wall portions 34 are provided as portions for fixing the load supporting member 23 by attachment to the lining support portion 24, and are provided so as to be integrated with the plate portion 33. Specifically, a pair of attachment wall portions 34 is provided, each portion being at a respective one of two end portions in the direction in which the plate portion 33 extends in an arc shape. The attachment wall portions 34 are provided as wall-shaped portions that spread out along a direction substantially perpendicular to the plate portion 33. The end portion of each attachment wall portion 34 on the side opposite to the plate portion 33 is fixed to the lining support portion 24.

The lining support portion 24 shown in FIGS. 1 to 5 and FIG. 10 is provided as a structure that supports multiple lining members 21 via multiple swing adjustment mechanisms 22, and can be held so as to be able to swing relative to the brake lever 13 driven by the brake cylinder device 101 of the disc brake device 100. This lining support portion 24 is formed using an integrated metal material, for example. Also, the lining support portion 24 is biased by the brake lever 13 included in the caliper body 11, and presses multiple lining members 21, which are supported via multiple swing adjustment mechanisms 22, against the disc 103.

The lining support portion 24 is configured so as to include a base portion 36 and a pair of load transfer portions (37a, 37b). The pair of load transfer portions (37a, 37b) are provided so as to be integrated with the base portion 36. Note that the pair of load transfer portions (37a, 37b) do not need to be provided so as to be integrated with the base portion 36, and may be provided in the state of being fixed to the base portion 36.

The base portion 36 is provided as a flat plate-shaped portion whose peripheral portion is formed so as to have an outer shape similar to that of the previously-described lining provision region 20. Also, the base portion 23 is configured such that out of the two faces that spread out flatly along the planar direction, one face supports multiple lining members 21 via multiple swing adjustment mechanisms 22.

The pair of load transfer portions (37a, 37b) are provided as portions capable of transferring a load from the brake lever 13 to the base portion 36. The brake lever 13 is provided with a pair of coupling end portions (13a, 13b) that are provided as a pair of portions that protrude out in correspondence to the pair of load transfer portions (37a, 37b), and are coupled to the pair of load transfer portions (37a, 37b). The coupling end portion 13a is coupled to the load transfer portion 37a, and the coupling end portion 13b is coupled to the load transfer portion 37b.

The load transfer portions (37a, 37b) are each configured as a pair of plate-shaped portions that extend along a direction perpendicular to the base portion 36. A through-hole for insertion of the swing pin 16 is provided in each of the pair of plate-shaped portions of each of the load transfer portions (37a, 37b). Also, the coupling end portion 13a is swingably coupled to the load transfer portion 37a via the swing pin 16 between the pair of plate-shaped portions. The coupling end portion 13b is swingably coupled to the load transfer portion 37b via the swing pin 16 between the pair of plate-shaped portions. In this way, the pair of load transfer portions (37a, 37b) are each provided so as to be able to be swingably attached to the brake lever 13 via the corresponding swing pin 16. Note that when the disc brake pad 10 is incorporated in the brake caliper device 1, the pair of load transfer portions (37a, 37b) are attached so as to be able to swing relative to the brake lever 13 via the swing pins 16 as described above.

When a load is transferred from the load transfer portions (37a, 37b) and the lining members 21 are pressed against the frictional braking face 103a, surface pressure is generated between the frictional braking face 103a and the lining members 21. The load transfer portions (37a, 37b) are provided at positions on the base portion 36 at which, when surface pressure is generated between the frictional braking face 103a and the lining members 21, the load that generates that surface pressure can act on the base portion 36 in a manner such that the magnitude of the surface pressure is inversely proportional to the magnitude of the distance from the position of the rotational centerline C1 of the disc 103

in the radial direction of the disc 103.

Also, the swing pins 16 are configured so as to be able to be disposed in the load transfer portions (37a, 37b) such that, relative to the lining support portion 24, their axial direction extends along a direction L1, which is a direction intersecting a direction that passes through a load center position C2 and is perpendicular to the frictional braking face 103a (see FIG. 1). Here, the load center position C2 is the position where the center of the load that generates the aforementioned surface pressure, which is generated between the frictional braking face 103a and the lining members 21, acts, and is a position on the friction face where the lining members 21 and the frictional braking face 103a of the disc 103 come into contact. Furthermore, the swing pins 16 are configured so as to be able to be disposed in the load transfer portions (37a, 37b) such that, relative to the lining support portion 24, their axial direction extends along the direction L1, which is also perpendicular to a radial direction R3 of the disc 103 and parallel to the frictional braking face 103a (see FIG. 1).

Note that the direction L1 in which the swing pins 16 extend is indicated by the dashed dotted line L1 in FIG. 1. Also, the radial direction R3 of the disc 103 is indicated by the dashed dotted line R3 in FIG. 1, and indicated by the dashed dotted line R3 in FIG. 8 as well. Furthermore, the position corresponding to the aforementioned load center position C2 in FIG. 1 is indicated as the intersection C2 between the dashed dotted line L1 and the dashed dotted line R3. Moreover, in FIG. 8, the load center position C2 is indicated as the point C2 indicated by a small circular mark.

The position of the intersection between the direction L1 in which the axial direction of the swing pins 16 extends and the direction that passes through the load center position C2 and is perpendicular to the frictional braking face 103a is located at an intermediate position between the pair of load transfer portions (37a, 37b) in the direction L1 in which the axial direction of the swing pins 16 extends. For this reason, when a load from the brake lever 13 acts on the pair of load transfer portions (37a, 37b) via the swing pins 16, the lining members 21 are as a whole subjected to a load whose load center is the load center position C2 from the lining support portion 24.

In the disc brake pad 10, as a result of the load from the brake lever 13 acting at the load center position C2, the surface pressure between the frictional braking face 103a and the lining members 21 is ultimately generated such that its magnitude is inversely proportional to the magnitude of the distance from the position of the rotational centerline C1 of the disc 103 in the radial direction of the disc 103. Accordingly, the occurrence of partial wear in the disc brake pad 10 is suppressed.

Also, the disc brake pad 10 is configured such as that the occurrence of partial wear is suppressed as a result of the load on the lining members 21 acting at the above-described specific load center position C2, and is configured such that a relationship similar to this relationship furthermore holds for each lining member 21. Specifically, in the disc brake pad 10, the first swing adjustment members (28, 29) support each of the swingably supported lining members 21 at a predetermined position that is set with a method similar to the above-described method for setting the load center position C2. This predetermined position is set as a position at which, when surface pressure is generated between the frictional braking face 103a and the lining members 21 when the lining members 21 are pressed against the frictional braking face 103a, the load for generating the surface pressure can act on each of the lining members 21 supported to the first swing adjustment members (28, 29) such that the magnitude of that surface pressure is inversely proportional to the magnitude of the distance from the position of the rotational centerline C1 of the disc 103 in the radial direction of the disc 103.

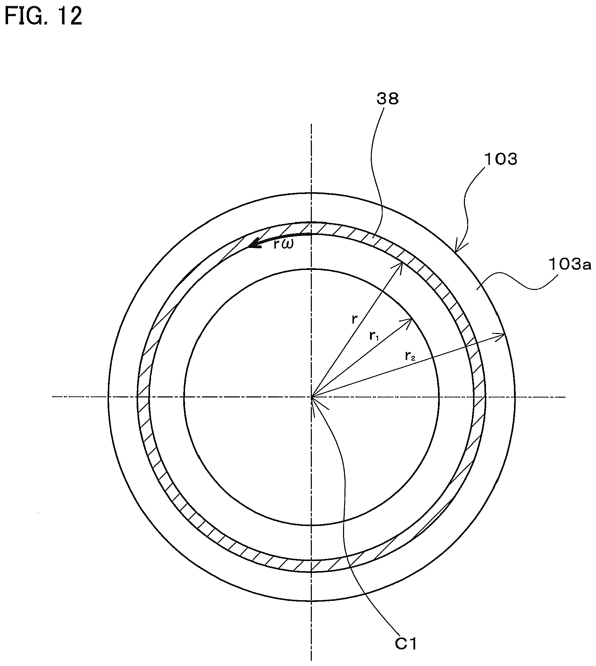

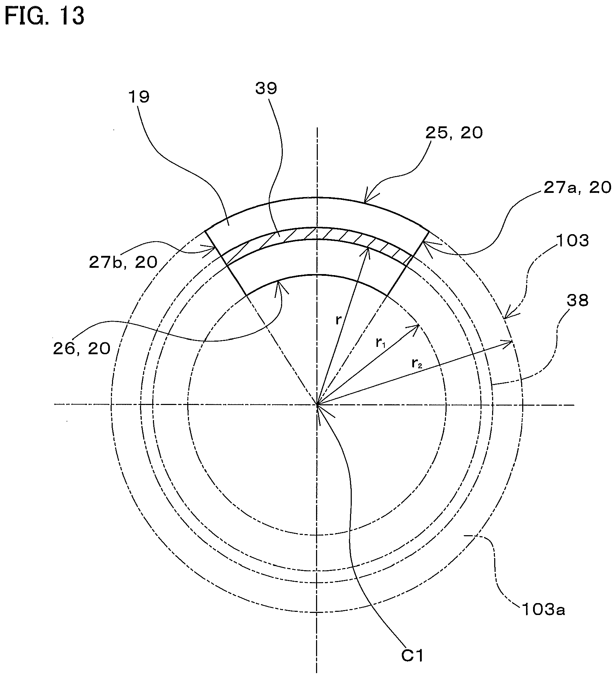

Next, the effect of suppressing the occurrence of partial wear on the lining members 21 as a whole, and the similar effect of suppressing the occurrence of partial wear in each of the lining members 21 will be described based on the analytical models shown in FIGS. 12 and 13.

Both the first condition and the second condition described below are satisfied by the brake caliper device 1 and the disc brake pad 10 described above. Accordingly, the occurrence of partial wear on the lining members 21 as a whole in the disc brake pad 10 is suppressed. Also, both the first condition and the second condition are satisfied for each of the lining members 21 as well. Accordingly, the occurrence of partial wear on each of the lining members 21 is suppressed as well. Note that the following describes the first condition and the second condition taking the example of an analytical model regarding the lining members 21 as a whole, and describes the effect of suppressing the occurrence of partial wear in the lining members 21 as a whole. The analytical model regarding each of the lining members 21 and the effect of suppressing the occurrence of partial wear in each of the lining members 21 will not be described since the analysis thereof is similar to the analysis regarding the lining members 21 as a whole. Also, the lining members 21 will, as a whole, be referred to as a lining member unit 19 in the following description.

The first condition is that the temperature of the frictional braking face 103a is equalized in the braking operation in which the lining member unit 19 of the disc brake pad 10 is pressed against the frictional braking face 103a of the disc 103. If unevenness of the temperature of the frictional braking face 103a of the disc 103 occurs, wear of the lining member unit 19 will be promoted in places where the temperature is high, and partial wear will occur. Accordingly, the satisfaction of the first condition suppresses the occurrence of partial wear of the lining member unit 19 resulting from unevenness in the temperature of the frictional braking face 103a of the disc 103.

FIG. 12 shows an analytical model for describing the first condition. In the analytical model shown in FIG. 12, the frictional braking face 103a of the disc 103 that comes into contact with the disc brake pad 10 is configured as an element that spreads out in the shape of a ring that has an outer circumferential radius $r_2$ and an inner circumferential radius $r_1$. The description of the first condition will be given using a ring-like element 38 as a ring-like element whose dimension in the radial direction of the frictional braking face 103a is a unit dimension of 1 (i.e., a unit-width ring-like element). Note that the ring-like element 38 is shown with diagonal hatching in FIG. 12. Also, the ring-like element 38 is shown in FIG. 12 as an element at a position that is a radial dimension r from the rotational centerline C1 of the disc 103.

If the first condition is satisfied, and the temperature of the frictional braking face 103a is equalized, a heat flux q (i.e., heat flow per unit area) of the frictional braking face 103a is also equalized. Accordingly, Expression 1 below holds true.

$$q = \mathrm{const} \,...(1)$$

Also, a heat flow Q, which is the frictional heat per unit time generated in the ring-like element 38, is proportional to the radial dimension r from the rotational centerline C1, and Expression 2 below is obtained.

$$Q = 2\pi r q \,...(2)$$

Also, the heat flow Q of the ring-like element 38 is expressed by Expression 3 below due to being proportional to the load from the disc brake pad 10 and the slipping velocity. A distribution factor $\alpha$ in Expression 3 below represents the factor by which the frictional heat generated between the disc brake pad 10 and the disc 103 is distributed to the disc 103. Also, a load F in Expression 3 below represents the pressing load that the ring-like element 38 is subjected to from the disc brake pad 10, which is the load that acts in the pressing direction perpendicular to the frictional braking face 103a. Furthermore, a friction coefficient $\mu$ in Expression 3 below represents the friction coefficient between the disc brake pad 10 and the disc 103. Moreover, an angular velocity $\omega$ in Expression 3 below represents the angular velocity of the disc 103. Accordingly, the slipping velocity of the ring-like element 38 is $r\omega$.

$$Q = \mu F r \omega \alpha \,...(3)$$

Thus, Expression 4 below is obtained from Expressions 2 and 3.

$$F = 2\pi q/(\mu\omega\alpha) = \mathrm{const} \,...(4)$$

According to Expression 4, if the first condition is satisfied, the load F that the ring-like element 38 is subjected to from the disc brake pad 10 is constant regardless of the position of the radial dimension r from the rotational centerline C1. Accordingly, if the first condition is satisfied, regardless of the position of the ring-like element 38 in the radial direction of the disc 103, the load F is a constant value that is determined according to the value of the uniform heat flux q of the frictional braking face 103a, regardless of the radius of the ring-like element 38.

The following describes the second condition that is to be satisfied in addition to the first condition. The second condition is that the braking energy per unit area of the lining member unit 19 pressed against the frictional braking face 103a is equalized in the braking operation. The amount of wear of the lining member unit 19 is a function of the braking energy of the lining member unit 19 that is pressed against the frictional braking face 103a. Accordingly, if the second condition is satisfied, unevenness in the braking energy per unit area of the lining member unit 19 is suppressed, and the amount of wear of the lining member unit 19 is equalized. This suppresses the occurrence of partial wear of the lining member unit 19.

FIG. 13 shows an analytical model for describing the second condition. In the analytical model shown in FIG. 13, the frictional braking face 103a is indicated by dashed double-dotted lines, and is configured as an element shaped as a ring having the outer circumferential radius $r_2$ and the inner circumferential radius $r_1$, similarly to the analytical model shown in FIG. 12. Also, in the analytical model shown in FIG. 13, the lining member unit 19 of the disc brake pad 10 is configured as an element that spreads out over the lining provision region 20 enclosed by the outer circumferential arc 25 at the radius $r_2$, the inner circumferential arc 26 at the radius $r_1$, and the pair of straight lines (27a, 27b).

The description of the second condition based on the analytical model shown in FIG. 13 will be given using a lining member-side element 39, which is an element that corresponds to the above-described ring-like element 38 and is on the lining member unit 19 side of the disc brake pad 10. Note that the lining member-side element 39 is shown with diagonal hatching in FIG. 13. Also, the lining member-side element 39 arranged at a position for coming into contact with the ring-like element 38 is shown in FIG. 13 as an element at a position that is a radial dimension r from the rotational centerline C1 of the disc 103, similarly to the ring-like element 38.

If the second condition is satisfied, the value of braking energy E of the disc brake pad 10 per unit time per unit area is equalized. Accordingly, Expression 5 below holds true.

$$E = const \ ...(5)$$

An area S of the lining member-side element 39 that corresponds to the ring-like element 38 is obtained by dividing the braking energy generated by the ring-like element 38 and the lining member-side element 39, which is the braking energy generated in proportion to the radial dimension r thereof, by the above-described braking energy E. Note that the braking energy generated in proportion to the radial dimension r of the ring-like element 38 and the lining member-side element 39 is obtained as the heat flow Q, which is the frictional heat per unit time, in Expression 2. Accordingly, the area S is expressed by Expression 6 below.

$$S = Q/E = 2\pi r q/E \ ...(6)$$

Furthermore, the value obtained by dividing the load F that the ring-like element 38 is subjected to from the disc brake pad 10 by the area S of the lining member-side element 39, which is obtained as described above, is the surface pressure p generated at the lining member-side element 39. Specifically, Expression 7 below is obtained from Expressions 4 and 6.

$$p = F/S = E/(\mu \omega \alpha r) \ ...(7)$$

According to Expressions 6 and 7, if the second condition is satisfied in addition to the first condition, the area S is proportional to the radial dimension r, and the magnitude of the surface pressure p is inversely proportional to the radial dimension r of the lining member-side element 39.

Accordingly, with the brake caliper device 1 and the disc brake pad 10, the load transfer portions (37a, 37b) are provided at positions on the base portion 36 at which the load F that generates the surface pressure p can act on the base portion 36 in a manner such that the magnitude of the surface pressure p, which is generated between the lining member unit 19 and the frictional braking face 103a, is inversely proportional to the magnitude of the distance from the position of the rotational centerline C1 of the disc 103 in the radial direction of the disc 103. For this reason, with the brake caliper device 1 and the disc brake pad 10, the relationship shown in Expression 7 holds true, and the first and second conditions described above are satisfied. Accordingly, the present embodiment enables suppressing the occurrence of partial wear of the disc brake pad 10.

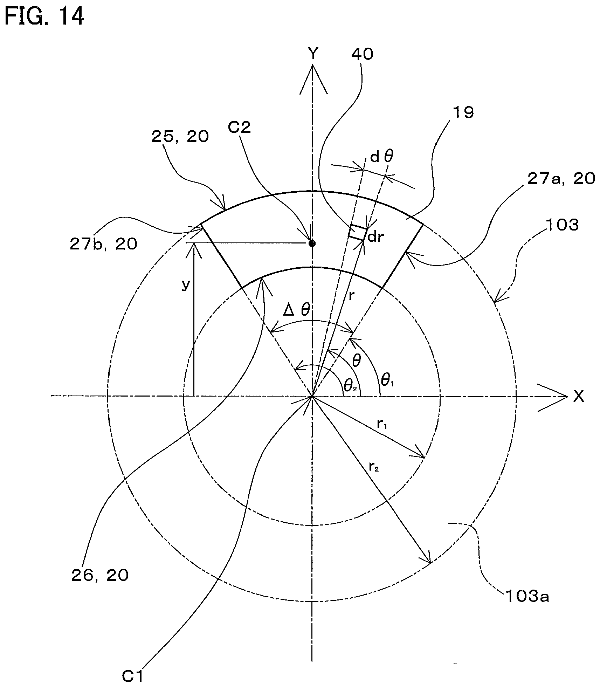

The following describes the load center position C2, which is the position where the lining member unit 19 of the disc brake pad 10 is subjected to the center of the load, which is the total surface pressure p. FIG. 14 is a diagram showing an analytical model for obtaining the load center position C2. In the analytical model shown in FIG. 14, the frictional braking face 103a is indicated by dashed double-dotted lines, and is configured as an element shaped as a ring having the outer circumferential radius $r_2$ and the inner circumferential radius $r_1$, similarly to the analytical models shown in FIGS. 12 and 13. Also, in the analytical model shown in FIG. 14, the lining member unit 19 is configured as an element that spreads out over the lining provision region 20 enclosed by the outer circumferential arc 25 at the radius $r_2$, the inner circumferential arc 26 at the radius $r_1$, and the pair of straight lines (27a, 27b), similarly to the analytical model shown in FIG. 13.

Also, in the analytical model shown in FIG. 14, the X axis and the Y axis are respectively set as the horizontal axis and the vertical axis that intersect at the rotational centerline C1. The Y axis is set so as to pass through the centerline in the circumferential direction of the lining member unit 19. In other words, the Y axis is set so as to pass through the position that bisects the surface area of the lining member unit 19. Also, a point C2 indicated by a small circular mark in FIG. 14 shows the load center position C2, which is the position where the lining member unit 19 is subjected to the center of the load, which is the total surface pressure p.

The load center position C2 indicated by the point C2 in FIG. 14 is located on the Y axis. The load center position coordinate y, which is the Y coordinate of the load center position, is the distance of the load center position from the rotational centerline C1. The load center position C2 of the lining member unit 19, which is specified by the load center position coordinate y, is the position where the center of the load, which is the total load F that generates the above-described surface pressure p (i.e., total surface pressure p), acts. The following describes arithmetic processing for obtaining the load center position coordinate y.

In the description of the arithmetic processing for obtaining the load center position coordinate y, a microelement 40 is set on the surface of the lining member unit 19. The microelement 40 is set as an element at a position that is the radial dimension r from the rotational centerline C1 of the disc 103, and that is at an angle $\theta$ in the counterclockwise direction relative to the X axis extending in the positive direction from the position of the rotational centerline C1. Also, the microelement 40 is set as a microelement whose length in the diameter direction is dr, and that spreads out over the angle d$\theta$ in the circumferential direction. Note that an angle $\theta_1$ is set as the angle relative to the X-axis positive direction in the direction in which the straight line 27a is located, which is the radial direction of the disc 103. Also, note that an angle $\theta_2$ is set as the angle relative to the X-axis positive direction in the direction in which the straight line 27b is located, which is the radial direction of the disc 103.

In order to obtain the load center position coordinate y, first, a moment M about the X axis due to the surface pressure p generated between the surface of the lining member unit 19 and the frictional braking face 103a is calculated. This moment M is obtained by solving Expression 8 below.

$$M = \int_S p\ y\ dS = \int_{r_1}^{r_2} \int_{\theta_1}^{\theta_2} a\ r\ \sin\theta\ d\theta\ dr \qquad \cdots (8)$$

Also, dS, the surface pressure p, and the load center position coordinate y are each expressed in Expression 9 shown below. Note that although the surface pressure p is obtained using the aforementioned Expression 7, it is expressed in Expression 8 as a constant a in the constant term portion other than the radial dimension r in the aforementioned Expression 7, as shown in Expression 9. Also, Expression 10 shown below is obtained by solving Expression 8.

$$dS = r\ d\theta\ dr \text{、}\ p = a / r \text{、}\ y = r\ \sin\theta \qquad \cdots (9)$$

$$M = a\ (r_2^{\ 2} - r_1^{\ 2}) \cdot \sin\frac{\theta_2 - \theta_1}{2} \qquad \cdots (10)$$

On the other hand, a load $F_A$, which is also the total surface pressure p and the aforementioned total load F, is obtained by solving Expression 11 below. Also, Expression 12 shown below is obtained when Expression 11 is solved.

$$F_A = \int_S p\ dS = \int_{r_1}^{r_2} \int_{\theta_1}^{\theta_2} a\ d\theta\ dr \qquad \cdots (11)$$

$$F_A = a\ (r_2 - r_1) \cdot (\theta_2 - \theta_1) \qquad \cdots (12)$$

Accordingly, the load center position coordinate y is obtained by Expression 13 below.

$$y = F_A / M = (r_2 + r_1) / (\theta_2 - \theta_1) \cdot \sin\frac{\theta_2 - \theta_1}{2} \qquad \cdots (13)$$

Here, Expression 14 below is obtained when Expression 13 is written using the spread angle $\Delta\theta$ in the circumferential direction of the lining member unit 19 (see FIG. 14), that is to say the spread angle $\Delta\theta$ obtained by subtracting the angle $\theta_1$ from the angle $\theta_2$.

$$y = (r_2 + r_1) / \Delta\theta \cdot \sin\frac{\Delta\theta}{2} \qquad \cdots (14)$$

The load center position coordinate y is specified by Expression 14 shown above. In the brake caliper device 1 and the disc brake pad 10, the positions of the load transfer portions (37a, 37b) on the base portion 36 are set such that the direction L1 in which the swing pins 16 are disposed intersects a direction that passes through the load center position C2, which is specified by the load center position coordinate y, and is perpendicular to the frictional braking face 103a. Note that as shown by the load center position coordinate y shown in Expression 14, the load center position C2, which is the position where the center of the load $F_A$ acts, is farther on the inner diameter side (on the rotational centerline C1 side) in the radial direction than the centroid of the surface of the lining member unit 19 is.

Effects of present embodiment

As described above, according to the present embodiment, multiple lining members 21 are supported to the lining support portion 24 via a swing adjustment mechanism 22. Furthermore, the swing adjustment mechanism 22 swingably supports multiple lining members 21 with first swing adjustment members (28, 29). The position in the direction of pressing against the frictional braking face 103a is adjusted for the lining members 21 relative to each other by the swinging of the first swing adjustment members (28, 29). Specifically, even if surface recessions and protrusions are formed due to the formation of partially raised places on surface of the frictional braking face 103a due to thermal expansion, the position in the pressing direction is adjusted for the lining members 21, which are supported to the first swing adjustment members (28, 29), relative to each other so as to imitate the recessions and protrusions on the surface. Thus, the pressing force against the frictional braking face 103a is adjusted for the lining members 21 relative to each other. Accordingly, when a partially raised place is formed on the surface of the frictional braking face 103a, the corresponding lining member 21 is prevented from being pressed against that place more forcefully than the lining members 21 that correspond to the surrounding region. As a result, the formation of heat spots on the disc 103 is suppressed, and the formation of heat cracks on the disc 103 is also suppressed.

Also, according to the present embodiment, load that is generated along a direction parallel to the frictional braking face 103a due to frictional braking force generated between the disc 103 and the lining members 21 is supported by the load supporting member 23 due to the load supporting member 23 coming into contact with the lining members 21. This prevents the load generated along the direction parallel to the frictional braking face 103a from acting on places where the lining members 21 are swingably supported to the first swing adjustment members (28, 29), or places where the first swing adjustment members (28, 29) are supported in the swing adjustment mechanism 22. This suppresses friction generated by the aforementioned load from becoming resistance with respect to the operation of the swing adjustment mechanism 22, thus ensuring smooth operation of the swing adjustment mechanism 22. In other words, this enables the smooth implementation of a function by which the force of pressing against the frictional braking face 103a is adjusted for the lining members 21 relative to each other. Also, the present embodiment eliminates the need for a pivoting support mechanism such as that disclosed in Japanese Patent No. 4090499. In other words, this eliminates the need for difficult spherical surface processing for processing sliding spherical surfaces. This enables reducing the number of processing steps.

Accordingly, the present embodiment enables providing the disc brake pad 10 that can suppress the formation of heat spots on the disc 103 and suppress the formation of heat cracks, as well as can reduce the number of processing steps and can enable the smooth implementation of a function by which the force of pressing against the frictional braking face 103a is adjusted for the lining members 21 relative to each other, and providing a brake caliper device 1 that includes this disc brake pad 10.

Also, according to the present embodiment, the first swing adjustment members (28, 29) are configured in the manner of a seesaw that is supported at an intermediate position and swingably supports a lining member 21 at each of two end portions. This enables realizing a simple configuration for a function by which the position in the direction of pressing against the frictional braking face 103a is adjusted for the lining members 21 relative to each other by swinging.

Also, according to the present embodiment, multiple first swing adjustment members (28, 29), each of which supports multiple lining members 21 arranged along the radial direction of the disc 103, are arranged along the radial direction of the disc 103. This enables multiple lining members 21 and the multiple first swing adjustment members (28, 29) that support them to be efficiently arranged densely along the frictional braking face 103a. This enables realizing even smoother implementation of the function by which the force of pressing against the frictional braking face 103a is adjusted for the many lining members 21 relative to each other.

Also, according to the present embodiment, the load supporting member 23 that supports the load generated along the direction parallel to the frictional braking face 103a due to frictional braking force can be easily formed with a simple structure having the plate portion 33 provided with multiple through-holes 33a whose edge portions 33b come into contact with the lining members 21.

Also, according to the present embodiment, the swing adjustment mechanism 22 is provided with a function by which the position in the direction of pressing against the frictional braking face 103a is adjusted for the lining members 21 relative to each other by the first swing adjustment members (28, 29), as well as a function by which this position in the pressing direction is adjusted for the first swing adjustment members (28, 29) relative to each other by the second swing adjustment member 30. For this reason, the function for adjusting the pressing positions of the lining members 21 relative to each other is made even more smooth and flexible with the swinging operation of the first swing adjustment members (28, 29) and the swinging operation of the second swing adjustment member 30.

Also, according to the present embodiment, the above-described first condition and second condition are satisfied in the disc brake pad 10, thus suppressing the occurrence of partial wear. Also, according to the present embodiment, when the disc brake pad 10 is used in the disc brake device 100, the lining members 21 are disposed so as to spread out over the lining provision region 20 enclosed by the outer circumferential arc 25 and the inner circumferential arc 26 (which are arranged concentrically with the rotational centerline C1 of the disc 103), and the pair of straight lines (27a, 27b) that extend along the radial direction of the disc 103 on respective sides of the arcs 25 and 26. This enables realizing the disc brake pad 10 for satisfying the above-described first condition and second condition with a simpler structure.

Also, according to the present embodiment, the above-described first condition and second condition are satisfied for the lining members 21 as a whole in the disc brake pad 10, and the above-described first condition and second condition are satisfied for each of the lining members 21 as well. This efficiently suppresses the occurrence of partial wear in individual lining members 21 as well.

Also, according to the present embodiment, for each of the first swing adjustment members (28, 29) disposed so as to extend along a direction parallel to the radial direction of the disc 103, the ratio of the distances from the support position P1 to the respective positions (P2, P3) where the outer and inner lining members (32a, 32b) are supported is set to the inverse of the ratio of the magnitudes of the loads acting on the outer and inner lining members (32a, 32b). For this reason, even if the magnitudes of the loads acting on the outer and inner lining members (32a, 32b) are different from each other, the force of pressing against the frictional braking face is adjusted for the outer and inner lining members (32a, 32b) relative to each other according to the differing load magnitudes. Accordingly, in the disc brake pad 10, it is possible to suppress the occurrence of partial wear in individual lining members 21, and to relax the constraints regarding the conditions for the load generated on the lining members 21. This enables improving the degree of freedom in the design of the disc brake pad 10 that enables adjustment of the force of pressing against the frictional braking face 103a for the lining members 21 relative to each other and also enables suppressing the occurrence of partial wear in individual lining members 21.

Variations

Although an embodiment of the present invention has been described above, the present invention is not intended to be limited to the above-described embodiment, and the present invention can be implemented with various changes within the range recited in the claims. For example, variations such as the following can be implemented.

(1) The shape of the lining member is not limited to the shape described as an example in the above embodiment, and can be implemented with various changes. Also, the shape of the peripheral portion of the lining provision region in which the lining members are disposed is not limited to the shape described as an example in the above embodiment, and can be implemented with various changes.

(2) The shape of the load supporting member is not limited to the shape described as an example in the above embodiment, and can be implemented with various changes. Although the above embodiment describes the example of a load supporting member that is provided with multiple through-holes into which the lining members are partially inserted, this is not required. For example, the load supporting member may be provided as a member that includes a flat plate-shaped portion provided with multiple recessions into which the lining members are partially inserted. In this case, the load supporting member supports the load generated along the direction parallel to the frictional braking face due to frictional braking force in the state in which the edge portion of each of the recessions is in contact with a corresponding lining member.

(3) The mode of the load transfer portion of the lining support portion is not limited to the mode described as an example in the above embodiment, and can be implemented with various changes. Although the above-described embodiment describes an example of the mode in which the load transfer portion is provided at two locations on the lining support portion, a mode may be implemented in which the load transfer portion is provided at one location or three or more locations on the lining support portion. In other words, the arrangement and number of load transfer portions may be changed in various manners as long as the mode is such that the center of the load acts on the same load center position as that in the above-described embodiment.

(4) The mode of the swing adjustment mechanism is not limited to the mode described as an example in the above embodiment, and can be implemented with various changes. For example, the swing adjustment mechanism may be implemented in a mode in which the second swing adjustment member is not provided, and the first swing adjustment members are swingably supported to the receiving portion fixed to the lining support portion.

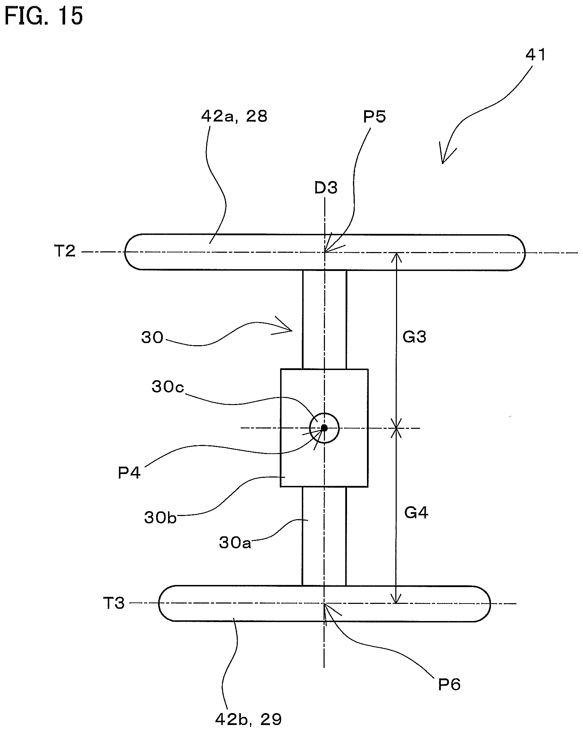

(5) FIG. 15 is a diagram for describing a swing adjustment mechanism 41 according to a variation. The following describes aspects of the swing adjustment mechanism 41 that are different from the above-described embodiment, and elements that correspond to or are configured similarly to those in the above embodiment will be indicated by the same reference signs in the drawing and referred to by the same reference signs in the description, and therefore descriptions thereof will be omitted as appropriate. Note that the swing adjustment mechanism 41 shown in FIG. 15 differs from the swing adjustment mechanism 22 of the above embodiment with respect to how the first swing adjustment members (28, 29) and the second swing adjustment member 30 are disposed. This difference will be described below.

FIG. 15 shows one swing adjustment mechanism 41 as viewed in the axle direction of a wheel of the railroad vehicle. FIG. 15 shows the example of one direction D3 (direction indicated by dashed dotted line D3 in FIG. 15) as the direction parallel to the radial direction of the disc 103 centered about the rotational centerline C1 of the disc 103. Also, FIG. 15 shows the example of two directions T2 and T3 (directions indicated by dashed dotted lines T2 and T3 in FIG. 15) as directions parallel to the direction tangential to the circle centered about the rotational centerline C1 of the disc 103.

In the swing adjustment mechanism 41, first swing adjustment members (28, 29) that are supported at respective end portions of the second swing adjustment member 30 are disposed such that their lengthwise directions extend along directions tangential to a circle centered about the rotational centerline C1 of the disc 103. Specifically, the first swing adjustment member 28 is disposed so as to extend along the direction T2, and the first swing adjustment member 29 is disposed so as to extend along the direction T3. Also, in the swing adjustment mechanism 41, the second swing adjustment member 30 is disposed such that its lengthwise direction extends along a direction parallel to the radial direction of the disc 103. Specifically, the second swing adjustment member 30 is disposed so as to extend along the direction D3.

Also, in the swing adjustment mechanism 41, the second swing adjustment member 30 supports each of the first swing adjustment members (28, 29) at an intermediate position between the two end portions thereof. Note that in the swing adjustment mechanism 41, the second swing adjustment member 30 supports each of the first swing adjustment members (28, 29) at the central position in the lengthwise direction thereof. Also, the two end portions of each of the first swing adjustment members (28, 29) respectively swingably support two lining members 21 that are aligned along the rotation direction of the disc 103. Furthermore, the receiving portion 31 fixed to the lining support portion 24 swingably supports the second swing adjustment member 30 of the swing adjustment mechanism 41 at an intermediate position between the two end portions of the second swing adjustment member 30. Note that in the swing adjustment mechanism 41, the receiving portion 31 supports the second swing adjustment member 30 at the central position in the lengthwise direction thereof.

Also, in the swing adjustment mechanism 41, the ratio of the distances from the position where the second swing adjustment member 30 is supported by the receiving portion 31 to the respective positions where the two first swing adjustment members (28, 29) are supported is set to a predetermined ratio as will be described below. In the following description of the predetermined ratio, out of the first swing adjustment members (28, 29) supported to the two end portions of the second swing adjustment member 30 as shown in FIG. 15, the one first swing adjustment member 28 arranged on the outer side in the radial direction of the disc 103 is defined as the outer swing adjustment member 42a. Also, out of the first swing adjustment members (28, 29) supported to the two end portions of the second swing adjustment member 30, the other first swing adjustment member 29 arranged on the inner side in the radial direction of the disc 103 is defined as the inner swing adjustment member 42b. In other words, the second swing adjustment member 30 supports the outer swing adjustment member 42a with the end portion on the outer side in the radial direction of the disc 103, and supports the inner swing adjustment member 42b with the end portion on the inner side in the radial direction of the disc 103.

Also, in the following description of the predetermined ratio, as shown in FIG. 15, a distance G3 is defined as the distance in the lengthwise direction of the second swing adjustment member 30 from a support position P4 (second support position in the present embodiment), which is the position where the second swing adjustment member 30 is swingably supported in the swing adjustment mechanism 41, to a position P5 where the outer swing adjustment member 42a is supported to the second swing adjustment member 30. Also, a distance G4 is defined as the distance in the lengthwise direction of the second swing adjustment member 30 from the support position P4 to a position P6 where the inner swing adjustment member 42b is supported to the second swing adjustment member 30.

Note that in FIG. 15, the support position P4 on the second swing adjustment member 30 is shown by the point P4 indicated by a small circular mark. Also, in FIG. 15, the position P5 is shown by the intersection between the dashed dotted line indicating the direction D3 and the dashed dotted line indicating the direction T2. Similarly, the position P6 is shown by the intersection between the dashed dotted line indicating the direction D3 and the dashed dotted line indicating the direction T3.

The ratio between the distance G3 and the distance G4 in the swing adjustment mechanism 41 is set to the aforementioned predetermined ratio. Specifically, the ratio between the distance G3 and the distance G4 in the swing adjustment mechanism 41 is set to the inverse of the ratio of the magnitude of the load in the pressing direction generated between the disc 103 and the multiple (two) lining members 21 supported to the outer swing adjustment member 42a, to the magnitude of the load in the pressing direction generated between the disc 103 and the multiple (two) lining members 21 supported to the inner swing adjustment member 42b. In other words, letting magnitude P5 be the magnitude of the total load in the pressing direction generated by the two lining members 21 on the outer swing adjustment member 42a, and magnitude P6 be the magnitude of the total load in the pressing direction generated by the two lining members 21 on the inner swing adjustment member 42b, the ratio between the distance G3 and the distance G4 is set such that the relationship (distance G3): (distance G4) = (magnitude P6) : (magnitude P5) holds.

According to this variation, with the second swing adjustment member 30 disposed so as to extend along a direction parallel to the radial direction of the disc 103, the ratio of the distances from the support position P4 to the respective positions (P5, P6) where the outer and inner swing adjustment members (42a, 42b) are supported is set to the inverse of the ratio of the magnitude of the load acting on the lining members 21 supported by the outer swing adjustment member 42a to the magnitude of the load acting on the lining members 21 supported by the inner swing adjustment member 42b. For this reason, even if the magnitude of the load acting on the lining members 21 supported by the outer swing adjustment member 42a is different from the magnitude of the load acting on the lining members 21 supported by the inner swing adjustment member 42b, the force of pressing against the frictional braking face 103a is adjusted for the outer and inner swing adjustment members (42a, 42b) relative to each other according to the differing load magnitudes. Thus, the configuration of the swing adjustment mechanism 41 can be further applied to the configuration of the above embodiment in which the occurrence of partial wear is suppressed in individual lining members 21. Accordingly, in the disc brake pad 10 that includes the swing adjustment mechanism 41 provided with the second swing adjustment member 30 that supports the first swing adjustment members (28, 29), it is possible to suppress the occurrence of partial wear in individual lining members 21, and to relax the constraints regarding the conditions for the load generated on the lining members 21. This enables improving the degree of freedom in the design of the disc brake pad 10 that enables adjustment of the force of pressing against the frictional braking face 103a for the lining members 21 relative to each other and also enables suppressing the occurrence of partial wear in individual lining members 21.

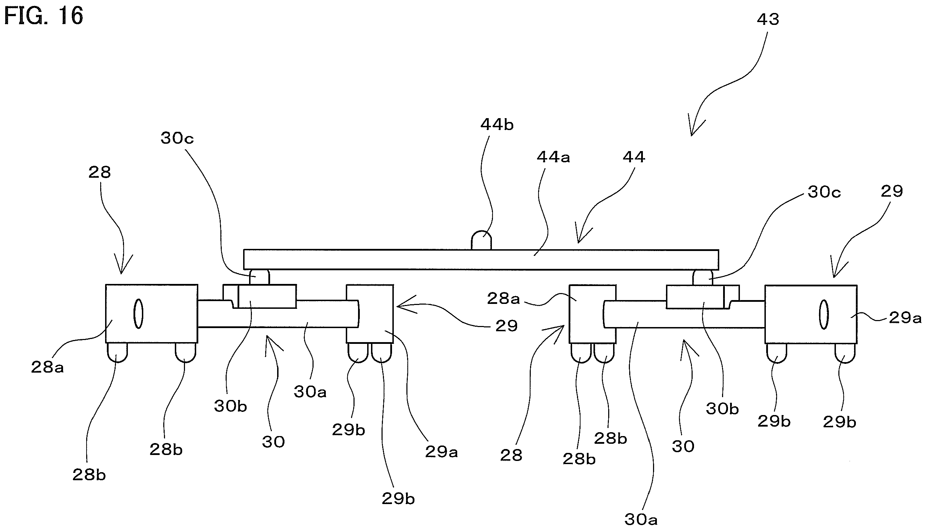

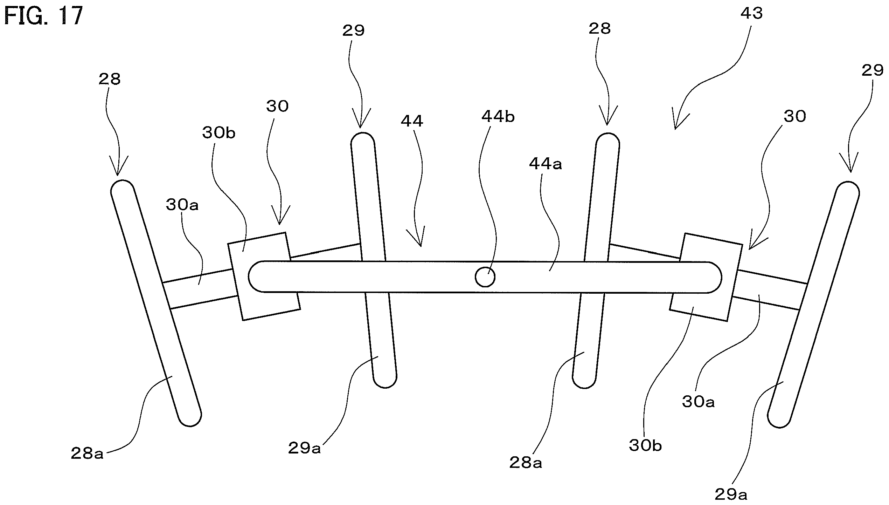

(6) FIGS. 16 and 17 are diagrams for describing a swing adjustment mechanism 43 according to another variation. The following describes aspects of the swing adjustment mechanism 43 that are different from the above-described embodiment, and elements that correspond to or are configured similarly to those in the above embodiment will be indicated by the same reference signs in the drawing and referred to by the same reference signs in the description, and therefore descriptions thereof will be omitted as appropriate.

FIG. 16 shows one swing adjustment mechanism 43 as viewed from a direction parallel to the frictional braking face 103a of the disc 103. Also, FIG. 17 shows the swing adjustment mechanism 43 of FIG. 16 as viewed in the axle direction of a wheel of the railroad vehicle.

As shown in FIGS. 16 and 17, the swing adjustment mechanism 43 includes multiple (two) second swing adjustment members 30 that each support multiple (two) first swing adjustment members (28, 29), and furthermore includes a third swing adjustment member 44 that supports the second swing adjustment members 30. The third swing adjustment member 44 includes a shaft portion 44a formed in the shape of a long and narrow shaft, and a protrusion portion 44b that is provided on the shaft portion 44a and is provided as a portion that comes into contact with and is supported to the receiving portion 31.

The two lengthwise end portions of the shaft portion 44a respectively swingably support the second swing adjustment members 30. The two end portions of the shaft portion 44a are each provided with a recession hole (not shown) that comes into contact with the protrusion portion 30c provided on the corresponding second swing adjustment member 30. The recession holes provided in the two end portions of the shaft portion 44a are, for example, formed in a shape similar to that of the recession holes 21c of the contact portions 21b of the lining members 21, thus being provided as a hole recessed in the shape of a hemispherical face. The protrusion portions 30c of the second swing adjustment members 30 come into contact with the above-described recession holes of the third swing adjustment member 44 so as to be loosely fitted therein. In this way, the protrusion portions 30c come into contact with the interior of the recession holes of the third swing adjustment member 44 so that the second swing adjustment members 30 are swingably supported to the third swing adjustment member 44.

The protrusion portion 44b is provided at the central position in the lengthwise direction of the shaft portion 44a, and is provided as a portion that protrudes in the shape of a projection. Note that FIG. 16 shows the example of a mode in which the end portion of the protrusion portion 44b is formed in the shape of a hemisphere. The protrusion portion 44b comes into contact with the recession hole of the receiving portion 31 so as to be loosely fitted therein. In this way, the protrusion portion 44c comes into contact with the interior of the recession hole of the receiving portion 31 fixed to the lining support portion 24 so that the third swing adjustment member 44 is swingably supported to the lining support portion 24 via the receiving portion 31.

The swing adjustment mechanism 43 is configured so as to support the second swing adjustment members 30 such that the position in the pressing direction can be adjusted for the second swing adjustment members 30 relative to each other by the swinging of the third swing adjustment member 44. Thus, eight lining members 21 are supported by the swing adjustment mechanism 43. Note that the swing adjustment mechanism may be implemented with a configuration that further includes a fourth swing adjustment member disposed so as to support multiple third swing adjustment members 44, and the third swing adjustment members 44 are supported such that the position in the pressing direction can be adjusted for the third swing adjustment members 44 relative to each other by the swinging of the fourth swing adjustment member. Thus, 16 lining members 21 are supported by this swing adjustment mechanism.

The present invention is widely applicable to a disc brake pad that is used in a disc brake device to be disposed in a vehicle and that can be pressed against a disc disposed so as to rotate along with an axle or a wheel in the vehicle, and also to a brake caliper device that includes this disc brake pad.

**Claims**

1. A disc brake pad (10) that is suitable to be pressed against a disc (103) of a vehicle, the disc brake pad (10) comprising:

    a plurality of lining members (21) that are suitable to be pressed against a fictional braking face (103a) of the disc (103);
    a swing adjustment mechanism (22; 41; 43) that supports the plurality of lining members (21);
    a load supporting member (23) that supports a load generated along a direction parallel to the fictional braking face (103a); and
    a lining support portion (24) that supports the swing adjustment mechanic (22; 41; 43), and is held so as to be able to swing relative to a caliper body (11) ofthe disc brake device (100),
    wherein the swing adjustment mechanism (22; 41; 43) has

    a first swing adjustment member (28, 29) that swingably supports the plurality of lining members (21), and
    a second swing adjustment member (30) that supports a plurality of the first swing adjustment member (28, 29),

    the plurality of first swing adjustment member (28, 29) are supported such that a position in a direction perpendicular to the frictional braking face (103a) can be adjusted for the plurality of first swing adjustment member (28, 29) relative to each other by swinging of the second swing adjustment member (30),
    the plurality of lining members (21) each have a body portion (21a) and a contact portion (21b) that protrudes from the body portion (21a),
    the load supporting member (23) has a plate portion (33) provided with a plurality of through-holes (33a) for insertion ofthe contact portions (21b),
    the lining support portion (24) has abase portion (36), and
    the base portion (36) swingably supports the second swing adjustment member (30) in a state of supporting the plate portion (33), and is suitable to be swingably coupled to the caliper body (11).

2. The disc brake pad (10) according to claim 1,
    wherein the first swing adjustment member (28, 29) is disposed such that a lining member (21) is supported at each of two end portions of the first swing adjustment member (28,29), and
    the swing adjustment mechanism (22; 41; 43) supports the first swing adjustment member (28,29) at an intermediate position between two end portions ofthe first swing adjustment member (28, 29).

3. The disc brake pad (10) according to claim 1 or 2,
    wherein the first swing adjustment member (28, 29) is

    disposed such that a lengthwise direction thereof extends along a direction parallel to a radial direction of the disc (103) centered about a rotational centerline of the disc (103), or along a direction parallel to a direction tangential to a circle centered about the rotational centerline, and
    disposed such that a lining member (21) is supported at each of two lengthwise end portions of the first swing adjustment member (28, 29).

4. The disc brake pad (10) according to any one of claims 1 to 3,

wherein the load supporting member (23) is provided as a member that includes a flat plate-shaped portion provided with a plurality of through-holes (33a) or recessions into which the plurality of lining members (21) are partially inserted, and
the lining members (21) come into contact with edge portions of the through-holes (33a) or edge portions of the recessions.

5. The disc brake pad (10) according to any one of claims 1 to 4,
wherein the lining support portion (24) is provided with a base portion (36) that supports the plurality of lining members (21), and a load transfer portion (37a, 37b) that is provided to be integrated with or fixed to the base portion (36) and can transfer a load from the caliper body(11) to the base portion (36), and
the load transfer portion (37a, 37b) is provided at a position on the base portion (36) at which, when surface pressure is generated between the plurality of lining members (21) and the frictional braking face (103a) when the plurality of lining member (21) are pressed against the frictional braking face (103a), a load that generates the surface pressure can act on the base portion (36) such that the magnitude of the surface pressure is inversely proportional to the magnitude of the distance from the position of the rotational centerline of the disc (103) in the radial direction ofthe disc (103).

6. The disc brake pad (10) according to claim 5,
wherein the plurality of lining members (21) can be disposed so as to spread out over a region enclosed by:

an outer circumferential arc (25) that extends in an arc-like manner along a circle centered about the rotational centerline and defines an outer edge portion ofthe region in the radial direction ofthe disc (103),
an inner circumferential arc (26) that extends in an arc-like manner along a circle centered about the rotational centerline and defines an inner edge portion ofthe region in the radial direction ofthe disc (103), and
a pair of straight lines (27a, 27b) that define edge portions of the region on both sides of the outer circumferential arc (25) and the inner circumferential arc (26) in a circumferential direction centered about the rotational centerline, and that extend linearly along the radial direction ofthe disc (103).

7. The disc brake pad (10) according to claim 5 or 6,
wherein the first swing adjustment member (28 29) supports the swingably supported plurality of lining members (21) at a position at which, when surface pressure is generated between the plurality of lining members (21) and the frictional braking face (103a) when the plurality of lining members (21) are pressed against the frictional braking face (103a), a load that generates the surface pressure can act on the lining member (21) such that the magnitude of the surface pressure is inversely proportional to the magnitude of the distance from the position of the rotational centerline of the disc (103) in the radial direction of the disc (103).

8. The disc brake pad (10) according to claim 7,
wherein the fist swing adjustment member (28, 29) is disposed such that a lining member (21) is supported at each of two end portions of the fist swing adjustment member (28,29),
the swing adjustment mechanism (22; 41; 43) supports the first swing adjustment member (28,29) at an intermediate position between two end portions ofthe first swing adjustment member (28, 29),
the first swing adjustment member (28, 29) is disposed such that a lengthwise direction thereof extends along a direction parallel to a radial direction of the disc (103) centered about arotational centerline of the disc (103),
out of the lining members (21) supported to the two end portions of the first swing adjustment member (28, 29), one lining member (21) arranged on the outer side in the radial direction ofthe disc (103) is provided as an outer lining member (32a), and another lining member (21) arranged on the inner side in the radial direction of the disc (103) is provided as an inner lining member (32b), and
in the swing adjustment mechanism (22; 43), a ratio of the distance in the lengthwise direction of the first swing adjustment member (28, 29) from a first support position, being the position where the first swing adjustment member (28, 29) is supported in the swing adjustment mechanism (22; 43), to a position where the outer lining member (32a) is supported to the first swing adjustment member (28, 29), to the distance in the lengthwise direction of the first swing adjustment member (28, 29) from the first support position to a position where the inner lining member (32b) is supported to the first swing adjustment member (28, 29), is the inverse of a ratio of the magnitude of the load in the pressing direction generated between the outer lining member (32a) and the disc (103), to the magnitude of the load in the pressing direction generated between the inner lining member (32b) and the disc (103).

9. The disc brake pad (10) according to claim 7, wherein the second swing adjustment member (30) supports the plurality of first swing adjustment members (28, 29) such that a position in the pressing direction can be adjusted for the plurality of first swing adjustment members (28, 29) relative to each other by swinging of the second swing adjustment member (30),

the first swing adjustment member (28, 29) is disposed such that a lining member (21) is supported at each of two end portions of the first swing adjustment member (28,29),

the second swing adjustment member (30) is disposed such that a fist swing adjustment member (28,29) is supported at each of two end portions of the second swing adjustment member (30),

the swing adjustment mechanism (41) supports each of the first swing adjustment members (28, 29) at an intermediate position between two end portions of the first swing adjustment member (28, 29), and swingably supports the second swing adjustment member (30) at an intermediate position between two end portions of the second swing adjustment member (30),

the first swing adjustment members (28, 29) supported to the two end portions of the second swing adjustment member (30) are each disposed such that a lengthwise direction thereof extends along a direction parallel to a direction tangential to a circle centered about the rotational centerline of the disc (103),

the second swing adjustment member (30) is disposed such that a lengthwise direction thereof extends along a direction parallel to the radial direction of the disc (103) centered about the rotational centerline of the disc (103),

out of the first swing adjustment members (28, 29) supported to the two end portions of the second swing adjustment member (30), one first swing adjustment member arranged on the outer side in the radial direction of the disc (103) is defined as an outer swing adjustment member (42a), and another first swing adjustment member arranged on the inner side in the radial direction of the disc (103) is defined as an inner swing adjustment member (42b), and

in the swing adjustment mechanism (41), a ratio of the distance in the lengthwise direction of the second swing adjustment member (30) from a second support position, being the position where the second swing adjustment member (30) is supported in the swing adjustment mechanism (41), to a position where the outer swing adjustment member (42a) is supported to the second swing adjustment member (30), to the distance in the lengthwise direction of the second swing adjustment member (30) from the second support position to a position where the inner swing adjustment member (42b) is supported to the second swing adjustment member (30), is the inverse of a ratio of the magnitude of the load in the pressing direction generated between the disc (103) and the plurality of lining members (21) supported to the outer swing adjustment member (42a), to the magnitude of the load in the pressing direction generated between the disc (103) and the plurality of lining members (21) supported to the inner swing adjustment member (42b).

10. A brake caliper device (1) that is suitable to press a disc brake pad (10) against a disc (103) of a vehicle, the brake caliper device (1) comprising:

a caliper body (11) that is equipped with a brake cylinder device (101) in the disc brake device (100), is to be attached so as to be able to rotate in a vehicle rolling rotation direction relative to the vehicle, and generates braking force by sandwiching the disc (103) with a pair of the disc brake pads (10) due to being driven by the brake cylinder device (101); and
the pair of disc brake pads (10) that are attached to the caliper body (11), and
the disc brake pad (10) comprising:

a plurality of lining members (21) that are pressed against a frictional braking face (103a) of the disc (103);
a swing adjustment mechanism (22; 41; 43) that supports the of lining members (21);
a load supporting member (23) that supports a load generated along a direction parallel to the frictional braking face (103a); and
a lining support portion (24) that supports the swing adjustment mechanism (22; 41; 43), and is held so as to be able to swing relative to the caliper body (11),
wherein the swing adjustment mechanism (22; 41; 43) has

a first swing adjustment member (28, 29) that swingably supports the plurality of lining member (21), and
a second swing adjustment member (30) that supports a plurality of the first swing adjustment member (28, 29),

the plurality of fist swing adjustment member (28, 29) are supported such that a position in a direction perpendicular to the frictional braking face (103a) can be adjusted for the plurality of first swing adjustment members (28, 29) relative to each other by swinging of the second swing adjustment member (30),
the plurality of lining members (21) each have a body portion (21a) and a contact portion (21b) that protrudes from the body portion (21a),
the load supporting member (23) has a plate portion (33) provided with a plurality of through-holes (33a) for insertion ofthe contact portions (21b),
the lining support portion (24) has abase portion (36), and
the base portion (36) swingably supports the second swing adjustment member (30) in a state of supporting
the plate portion (33), and is swingably coupled to the caliper body (11).

**Patentansprüche**

1. Scheibenbremsbelag (10), der dazu geeignet ist, gegen eine Scheibe (103) eines Fahrzeugs gepresst zu werden,
wobei der Scheibenbremsbelag (10) umfasst:

   eine Vielzahl von Belagelementen (21), die dazu geeignet sind, gegen eine fiktive Reibbremsfläche (103a) der
   Scheibe (103) gepresst zu werden;
   einen Schwenkeinstellmechanismus (22; 41; 43), der die Vielzahl von Belagelementen (21) trägt;
   ein Lasttragelement (23), das eine Last trägt, die entlang einer Richtung parallel zur Reibbremsfläche (103a)
   erzeugt wird; und
   einen Belagträgerabschnitt (24), der den Schwenkeinstellmechanismus (22; 41; 43) trägt und so gehalten wird,
   dass er relativ zu einem Bremssattelkörper (11) der Scheibenbremsvorrichtung (100) schwenken kann,
   wobei der Schwenkeinstellmechanismus (22; 41; 43)
   ein erstes Einstellelement (28, 29) aufweist, das die Vielzahl von Belagelementen (21) schwenkbar trägt, und
   ein zweites Einstellelement (30) aufweist, das eine Vielzahl der ersten Schwenkeinstellelemente (28, 29) trägt,
   die Vielzahl der ersten Schwenkeinstellelemente (28, 29) so gelagert ist, dass eine Position in einer Richtung
   rechtwinklig zur Reibbremsfläche (103a) für die Vielzahl der ersten Schwenkeinstellelemente (28, 29) relativ
   zueinander durch Schwenken des zweiten Schwenkeinstellelements (30) eingestellt werden kann,
   die Vielzahl von Belagelementen (21) jeweils einen Körperabschnitt (21a) und einen Kontaktabschnitt (21b)
   aufweisen, der von dem Körperabschnitt (21a) vorsteht,
   das Lasttragelement (23) einen Plattenabschnitt (33) aufweist, der mit einer Vielzahl von Durchgangslöchern
   (33a) zum Einsetzen der Kontaktabschnitte (21b) versehen ist,
   der Belagträgerabschnitt (24) einen Basisabschnitt (36) aufweist, und
   der Basisabschnitt (36) das zweite Einstellelement (30) in einem Zustand der Abstützung des Plattenabschnitts
   (33) schwenkbar trägt und dazu geeignet ist, schwenkbar mit dem Bremssattelkörper (11) gekoppelt zu sein.

2. Scheibenbremsbelag (10) nach Anspruch 1,
wobei das erste Schwenkeinstellelement (28, 29) so angeordnet ist, dass ein Belagelement (21) an jedem von zwei
Endabschnitten des ersten Schwenkeinstellelements (28, 29) getragen wird, und
der Schwenkeinstellmechanismus (22; 41; 43) das erste Schwenkeinstellelement (28, 29) an einer Zwischenposition
zwischen zwei Endabschnitten des ersten Schwenkeinstellelements (28, 29) trägt.

3. Scheibenbremsbelag (10) nach Anspruch 1 oder 2,
wobei das erste Schwenkeinstellelement (28, 29)

   so angeordnet ist, dass eine Längsrichtung davon sich entlang einer Richtung parallel zu einer radialen Richtung
   der Scheibe (103), die um eine Rotationsmittellinie der Scheibe (103) zentriert ist, oder entlang einer Richtung
   parallel zu einer Richtung tangential zu einem Kreis, der um die Rotationsmittellinie zentriert ist, erstreckt, und
   so angeordnet ist, dass ein Belagelement (21) an jedem von zwei Längsendabschnitten des ersten Schwenkeinstellelements (28, 29) getragen wird.

4. Scheibenbremsbelag (10) nach einem der Ansprüche 1 bis 3,
wobei das Lasttragelement (23) als ein Element vorgesehen ist, das einen ebenen plattenförmigen Abschnitt aufweist, der mit einer Vielzahl von Durchgangslöchern (33a) oder Aussparungen versehen ist, in die die Vielzahl von
Belagelementen (21) teilweise eingesetzt sind, und
die Belagelemente (21) mit Randabschnitten der Durchgangslöcher (33a) oder Randabschnitten der Aussparungen
in Berührung kommen.

5. Scheibenbremsbelag (10) nach einem der Ansprüche 1 bis 4,
wobei der Belagträgerabschnitt (24) mit einem Basisabschnitt (36), der die Vielzahl von Belagelementen (21) trägt,
und einem Lastübertragungsabschnitt (37a, 37b) versehen ist, der dazu vorgesehen ist, mit dem Basisabschnitt
(36) integriert oder daran befestigt zu werden, und eine Last vom Bremssattelkörper (11) auf den Basisabschnitt (36) übertragen kann, und
der Lastübertragungsabschnitt (37a, 37b) an einer Position am Basisabschnitt (36) vorgesehen ist, an der, wenn eine Flächenpressung zwischen der Vielzahl von Belagelementen (21) und der Reibbremsfläche (103a) erzeugt wird, wenn die Vielzahl von Belagelementen (21) gegen die Reibbremsfläche (103a) gepresst wird, eine die Flächenpressung erzeugende Last so auf den Basisteil (36) wirken kann, dass die Größe der Flächenpressung umgekehrt proportional zur Größe des Abstands von der Position der Rotationsmittellinie der Scheibe (103) in radialer Richtung der Scheibe (103) ist.

6.  Scheibenbremsbelag (10) nach Anspruch 5,
wobei die Vielzahl von Belagelementen (21) so angeordnet sein kann, dass sie sich über einen Bereich ausbreiten, der umschlossen ist durch:

einen äußeren Umfangsbogen (25), der sich bogenförmig entlang eines um die Rotationsmittellinie zentrierten Kreises erstreckt und einen äußeren Randabschnitt des Bereichs in radialer Richtung der Scheibe (103) definiert,
einen inneren Umfangsbogen (26), der sich bogenförmig entlang eines um die Rotationsmittellinie zentrierten Kreises erstreckt und einen inneren Randabschnitt des Bereichs in radialer Richtung der Scheibe (103) definiert, und
ein Paar gerader Linien (27a, 27b), die Randabschnitte des Bereichs auf beiden Seiten des äußeren Umfangsbogens (25) und des inneren Umfangsbogens (26) in einer Umfangsrichtung definieren, die um die Rotationsmittellinie zentriert ist, und die sich linear entlang der radialen Richtung der Scheibe (103) erstrecken.

7.  Scheibenbremsbelag (10) nach Anspruch 5 oder 6,
wobei das erste Schwenkeinstellelement (28, 29) die schwenkbar getragene Vielzahl von Belagelementen (21) an einer Position trägt, an der, wenn eine Flächenpressung zwischen der Vielzahl von Belagelementen (21) und der Reibbremsfläche (103a) erzeugt wird, wenn die Vielzahl von Belagelementen (21) gegen die Reibbremsfläche (103a) gepresst wird, eine die Flächenpressung erzeugende Last so auf die Belagelemente (21) wirken kann, dass die Größe der Flächenpressung umgekehrt proportional zur Größe des Abstands von der Position der Rotationsmittellinie der Scheibe (103) in radialer Richtung der Scheibe (103) ist.

8.  Scheibenbremsbelag (10) nach Anspruch 7,
wobei das erste Schwenkeinstellelement (28, 29) so angeordnet ist, dass ein Belagelement (21) an jedem von zwei Endabschnitten des ersten Schwenkeinstellelements (28, 29) getragen wird,
der Schwenkeinstellmechanismus (22; 41; 43) das erste Schwenkeinstellelement (28, 29) an einer Zwischenposition zwischen zwei Endabschnitten des ersten Schwenkeinstellelements (28, 29) trägt,
das erste Schwenkeinstellelement (28, 29) so angeordnet ist, dass sich eine Längsrichtung davon entlang einer Richtung parallel zu einer radialen Richtung der Scheibe (103) erstreckt, die um eine Rotationsmittellinie der Scheibe (103) zentriert ist,
von den an den beiden Endabschnitten des ersten Schwenkeinstellelements (28, 29) getragenen Belagelementen (21) ein in radialer Richtung der Scheibe (103) außenseitig angeordnetes Belagelement (21) als ein äußeres Belagelement (32a) vorgesehen ist und ein in radialer Richtung der Scheibe (103) innenseitig angeordnetes weiteres Belagelement (21) als ein inneres Belagelement (32b) vorgesehen ist, und
im Schwenkeinstellmechanismus (22; 43), ein Verhältnis des Abstands in Längsrichtung des ersten Schwenkeinstellelements (28, 29) von einer ersten Tragposition, die die Position ist, in der das erste Schwenkeinstellelement (28, 29) im Schwenkeinstellmechanismus (22; 43) getragen wird, bis zu einer Position, in der das äußere Belagelement (32a) am ersten Schwenkeinstellelement (28, 29) getragen wird, zum Abstand in Längsrichtung des ersten Schwenkeinstellelements (28, 29) von der ersten Tragposition bis zu einer Position, in der das innere Belagelement (32b) am ersten Schwenkeinstellelement (28, 29) getragen wird, der Kehrwert eines Verhältnisses der Größe der zwischen dem äußeren Belagelement (32a) und der Scheibe (103) erzeugten Last in Pressrichtung zur Größe der zwischen dem inneren Belagelement (32b) und der Scheibe (103) erzeugten Last ist.

9.  Scheibenbremsbelag (10) nach Anspruch 7,
wobei das zweite Schwenkeinstellelement (30) die Vielzahl der ersten Schwenkeinstellelemente (28, 29) so trägt, dass eine Position in Pressrichtung für die Vielzahl der ersten Schwenkeinstellelemente (28, 29) relativ zueinander durch Schwenken des zweiten Schwenkeinstellelements (30) eingestellt werden kann,
das erste Schwenkeinstellelement (28, 29) so angeordnet ist, dass ein Belagelement (21) an jedem von zwei Endabschnitten des ersten Schwenkeinstellelements (28, 29) getragen wird,
das zweite Schwenkeinstellelement (30) so angeordnet ist, dass ein erstes Schwenkeinstellelement (28, 29) an jedem von zwei Endabschnitten des zweiten Schwenkeinstellelements (30) getragen wird,

der Schwenkeinstellmechanismus (41) jedes der ersten Schwenkeinstellelemente (28, 29) an einer Zwischenposition zwischen zwei Endabschnitten des ersten Schwenkeinstellelements (28, 29) trägt und das zweite Schwenkeinstellelement (30) schwenkbar an einer Zwischenposition zwischen zwei Endabschnitten des zweiten Schwenkeinstellelements (30) trägt,

die ersten Schwenkeinstellelemente (28, 29), die an den beiden Endabschnitten des zweiten Schwenkeinstellelements (30) getragen werden, jeweils so angeordnet sind, dass eine Längsrichtung davon sich entlang einer Richtung parallel zu einer Richtung tangential zu einem Kreis erstreckt, der um die Rotationsmittellinie der Scheibe (103) zentriert ist,

das zweite Schwenkeinstellelement (30) so angeordnet ist, dass sich eine Längsrichtung davon entlang einer Richtung parallel zur radialen Richtung der Scheibe (103) erstreckt, die um die Rotationsmittellinie der Scheibe (103) zentriert ist,

von den ersten Schwenkeinstellelementen (28, 29), die an den beiden Endabschnitten des zweiten Schwenkeinstellelements (30) getragen werden, ein erstes Schwenkeinstellelement, das außenseitig in radialer Richtung der Scheibe (103) angeordnet ist, als ein äußeres Schwenkeinstellelement (42a) definiert ist und ein weiteres erstes Schwenkeinstellelement, das innenseitig in radialer Richtung der Scheibe (103) angeordnet ist, als ein inneres Schwenkeinstellelement (42b) definiert ist, und

im Schwenkeinstellmechanismus (41) ein Verhältnis des Abstands in Längsrichtung des zweiten Schwenkeinstellelements (30) von einer zweiten Tragposition, die die Position ist, in der das zweite Schwenkeinstellelement (30) im Schwenkeinstellmechanismus (41) getragen wird, bis zu einer Position, in der das äußere Schwenkeinstellelement (42a) am zweiten Schwenkeinstellelement (30) getragen wird, zum Abstand in Längsrichtung des zweiten Schwenkeinstellelements (30) von der zweiten Tragposition bis zu einer Position, in der das innere Schwenkeinstellelement (42b) am zweiten Schwenkeinstellelement (30) getragen wird, der Kehrwert eines Verhältnisses der Größe der zwischen der Scheibe (103) und der Vielzahl von Belagelementen (21), die am äußeren Schwenkeinstellelement (42a) gehalten werden, erzeugten Last in Pressrichtung zur Größe der zwischen der Scheibe (103) und der Vielzahl von Belagelementen (21), die am inneren Schwenkeinstellelement (42b) gehalten werden, erzeugten Last in Pressrichtung ist.

10. Bremssattelvorrichtung (1), die dazu geeignet ist, einen Scheibenbremsbelag (10) gegen eine Scheibe (103) eines Fahrzeugs zu pressen, wobei die Bremssattelvorrichtung (1) umfasst

einen Bremssattelkörper (11), der mit einer Bremszylindervorrichtung (101) in der Scheibenbremsvorrichtung (100) ausgestattet ist, so zu befestigen ist, dass er sich in einer Fahrzeug-Rolldrehrichtung relativ zum Fahrzeug drehen kann, und eine Bremskraft durch Einklemmen der Scheibe (103) mit einem Paar der Scheibenbremsbeläge (10) aufgrund des Antriebs durch die Bremszylindervorrichtung (101) erzeugt; und

das Paar von Scheibenbremsbelägen (10), die am Bremssattelkörper (11) befestigt sind, und

den Scheibenbremsbelag (10), umfassend:

eine Vielzahl von Belagelementen (21), die gegen eine Reibbremsfläche (103a) der Scheibe (103) gepresst werden;

einen Schwenkeinstellmechanismus (22; 41; 43), der die Vielzahl von Belagelementen (21) trägt;

ein Lasttragelement (23), das eine Last trägt, die entlang einer Richtung parallel zur Reibbremsfläche (103a) erzeugt wird; und

einen Belagträgerabschnitt (24), der den Schwenkeinstellmechanismus (22; 41; 43) trägt und so gehalten wird, dass er relativ zum Bremssattelkörper (11) schwenken kann,

wobei der Schwenkeinstellmechanismus (22; 41; 43)

ein erstes Schwenkeinstellelement (28, 29) aufweist, das die Vielzahl von Belagelementen (21) schwenkbar trägt, und

ein zweites Schwenkeinstellelement (30) aufweist, das eine Vielzahl der ersten Schwenkeinstellelemente (28, 29) trägt,

die Vielzahl der ersten Schwenkeinstellelemente (28, 29) so gelagert ist, dass eine Position in einer Richtung rechtwinklig zur Reibbremsfläche (103a) für die Vielzahl der ersten Schwenkeinstellelemente (28, 29) relativ zueinander durch Schwenken des zweiten Schwenkeinstellelements (30) eingestellt werden kann,

die Vielzahl von Belagelementen (21) jeweils einen Körperabschnitt (21a) und einen Kontaktabschnitt (21b) aufweisen, der von dem Körperabschnitt (21a) vorsteht,

das Lasttragelement (23) einen Plattenabschnitt (33) aufweist, der mit einer Vielzahl von Durchgangslöchern (33a) zum Einsetzen der Kontaktabschnitte (21b) versehen ist,

der Belagträgerabschnitt (24) einen Basisabschnitt (36) aufweist, und

der Basisabschnitt (36) das zweite Schwenkeinstellelement (30) in einem Zustand der Abstützung des Plattenabschnitts (33) schwenkbar trägt und schwenkbar mit dem Bremssattelkörper (11) gekoppelt ist.

**Revendications**

1. Plaquette de frein à disque (10) appropriée pour être pressée contre un disque (103) d'un véhicule, la plaquette de frein à disque (10) comprenant :

   une pluralité d'organes de garniture (21) qui sont aptes à être pressés contre une face de freinage par friction (103a) du disque (103) ;
   un mécanisme d'ajustement d'oscillation (22 ; 41 ; 43) qui supporte la pluralité d'organes de garniture (21) ;
   un organe de support de charge (23) qui supporte une charge générée le long d'une direction parallèle à la face de freinage par friction (103a) ; et
   une partie de support de garniture (24) qui supporte le mécanisme d'ajustement d'oscillation (22 ; 41 ; 43), et qui est retenue de manière à pouvoir osciller par rapport à un corps d'étrier (11) du dispositif de frein à disque (100),
   le mécanisme d'ajustement d'oscillation (22 ; 41 ; 43) présentant

      un premier organe d'ajustement d'oscillation (28, 29) qui supporte de manière oscillante la pluralité d'organes de garniture (21), et
      un deuxième organe d'ajustement d'oscillation (30) qui supporte une pluralité des premiers organes d'ajustement d'oscillation (28, 29),

      la pluralité des premiers organes d'ajustement d'oscillation (28, 29) étant supportés de telle sorte qu'une position dans une direction perpendiculaire à la face de freinage par friction (103a) puisse être ajustée pour la pluralité de premiers organes d'ajustement d'oscillation (28, 29) les uns par rapport aux autres en faisant osciller le deuxième organe d'ajustement d'oscillation (30),
      la pluralité d'organes de garniture (21) ayant chacun une partie de corps (21a) et une partie de contact (21b) qui fait saillie depuis la partie de corps (21a),
      l'organe de support de charge (23) ayant une partie de plaque (33) pourvue d'une pluralité de trous traversants (33a) pour l'insertion des parties de contact (21b),
      la partie de support de garniture (24) ayant une partie de base (36), et
      la partie de base (36) supportant de manière oscillante le deuxième organe d'ajustement d'oscillation (30) dans un état de support de la partie de plaque (33), et étant apte à être accouplée de manière oscillante avec le corps d'étrier (11).

2. Plaquette de frein à disque (10) selon la revendication 1, dans laquelle
   le premier organe d'ajustement d'oscillation (28, 29) est disposé de telle sorte qu'un organe de garniture (21) soit supporté au niveau de chacune de deux parties d'extrémité du premier organe d'ajustement d'oscillation (28, 29), et
   le mécanisme d'ajustement d'oscillation (22 ; 41 ; 43) supporte le premier organe d'ajustement d'oscillation (28, 29) à une position intermédiaire entre deux parties d'extrémité du premier organe d'ajustement d'oscillation (28, 29) .

3. Plaquette de frein à disque (10) selon la revendication 1 ou 2,
   dans laquelle le premier organe d'ajustement d'oscillation (28, 29) est
   disposé de telle sorte qu'une direction en longueur de celui-ci s'étende le long d'une direction parallèle à la direction radiale du disque (103) centrée autour d'un axe de rotation central du disque (103), ou le long d'une direction parallèle à une direction tangentielle à un cercle centré autour de l'axe de rotation central, et
   disposé de telle sorte qu'un organe de garniture (21) soit supporté au niveau de chacune de deux parties d'extrémité en longueur du premier organe d'ajustement d'oscillation (28, 29).

4. Plaquette de frein à disque (10) selon l'une quelconque des revendications 1 à 3, dans laquelle l'organe de support de charge (23) est prévu sous forme d'organe comportant une partie en forme de plaque plate pourvue d'une pluralité de trous traversants (33a) ou de renfoncements dans lesquels la pluralité d'organes de garniture (21) sont insérés en partie, et
   les organes de garniture (21) viennent en contact avec des parties de bord des trous traversants (33a) ou des parties de bord des renfoncements.

**5.** Plaquette de frein à disque (10) selon l'une quelconque des revendications 1 à 4, dans laquelle la partie de support de garniture (24) est pourvue d'une partie de base (36) qui supporte la pluralité d'organes de garniture (21), et d'une partie de transfert de charge (37a, 37b) qui est prévue pour être intégrée avec ou fixée à la partie de base (36) et qui peut transférer une charge du corps d'étrier (11) à la partie de base (36), et

la partie de transfert de charge (37a, 37b) est prévue à une position sur la partie de base (36) à laquelle, lorsqu'une pression de surface est générée entre la pluralité d'organes de garniture (21) et la face de freinage par friction (103a) lorsque la pluralité d'organes de garniture (21) sont pressés contre la face de freinage par friction (103a), une charge qui génère la pression de surface peut agir sur la partie de base (36) de telle sorte que la mesure de la pression de surface soit inversement proportionnelle à la mesure de la distance à partir de la position de l'axe de rotation central du disque (103) dans la direction radiale du disque (103).

**6.** Plaquette de frein à disque (10) selon la revendication 5,
dans laquelle la pluralité d'organes de garniture (21) peuvent être disposés de manière à s'étaler sur une région entourée par :

un arc circonférentiel extérieur (25) qui s'étend en forme d'arc le long d'un cercle centré autour de l'axe de rotation central et qui définit une partie de bord extérieure de la région dans la direction radiale du disque (103),
un arc circonférentiel intérieur (26) qui s'étend en forme d'arc le long d'un cercle centré autour de l'axe de rotation central et qui définit une partie de bord intérieure de la région dans la direction radiale du disque (103), et
une paire de lignes droites (27a, 27b) qui définissent des parties de bord de la région des deux côtés de l'arc circonférentiel extérieur (25) et de l'arc circonférentiel intérieur (26) dans une direction circonférentielle centrée autour de l'axe de rotation central, et qui s'étendent linéairement le long de la direction radiale du disque (103).

**7.** Plaquette de frein à disque (10) selon la revendication 5 ou 6,
dans laquelle le premier organe d'ajustement d'oscillation (28, 29) supporte la pluralité d'organes de garniture (21) supportés de manière oscillante à une position à laquelle, lorsqu'une pression de surface est générée entre la pluralité d'organes de garniture (21) et la face de freinage par friction (103a) lorsque la pluralité d'organes de garniture (21) sont pressés contre la face de freinage par friction (103a), une charge qui génère la pression de surface peut agir sur les organes de garniture (21) de telle sorte que la mesure de la pression de surface soit inversement proportionnelle à la mesure de la distance à partir de la position de l'axe de rotation central du disque (103) dans la direction radiale du disque (103).

**8.** Plaquette de frein à disque (10) selon la revendication 7, dans laquelle
le premier organe d'ajustement d'oscillation (28, 29) est disposé de telle sorte qu'un organe de garniture (21) soit supporté à chacune de deux positions d'extrémité du premier organe d'ajustement d'oscillation (28, 29),
le mécanisme d'ajustement d'oscillation (22 ; 41 ; 43) supporte le premier organe d'ajustement d'oscillation (28, 29) à une position intermédiaire entre deux positions d'extrémité du premier organe d'ajustement d'oscillation (28, 29),
le premier organe d'ajustement d'oscillation (28, 29) est disposé de telle sorte qu'une direction en longueur de celui-ci s'étende le long d'une direction parallèle à la direction radiale du disque (103) centrée autour d'un axe de rotation central du disque (103),
parmi les organes de garniture (21) supportés au niveau des deux parties d'extrémité du premier organe d'ajustement d'oscillation (28, 29), un organe de garniture (21) disposé sur le côté extérieur dans la direction radiale du disque (103) est prévu sous forme d'organe de garniture extérieur (32a), et un autre organe de garniture (21) disposé sur le côté intérieur dans la direction radiale du disque (103) est prévu sous forme d'organe de garniture intérieur (32b), et dans le mécanisme d'ajustement d'oscillation (22 ; 43), un rapport de la distance dans la direction en longueur du premier organe d'ajustement d'oscillation (28, 29) depuis une première position de support, qui est la position à laquelle le premier organe d'ajustement d'oscillation (28, 29) est supporté dans le mécanisme d'ajustement d'oscillation (22 ; 43), jusqu'à une position à laquelle l'organe de garniture extérieur (32a) est supporté au niveau du premier organe d'ajustement d'oscillation (28, 29), à la distance dans la direction en longueur du premier organe d'ajustement d'oscillation (28, 29) de la première position de support jusqu'à une position à laquelle l'organe de garniture intérieur (32b) est supporté au niveau du premier organe d'ajustement d'oscillation (28, 29), est l'inverse d'un rapport de la mesure de la charge dans la direction de pressage générée entre l'organe de garniture extérieur (32a) et le disque (103), à la mesure de la charge dans la direction de pressage générée entre l'organe de garniture intérieur (32b) et le disque (103).

**9.** Plaquette de frein à disque (10) selon la revendication 7, dans laquelle
le deuxième organe d'ajustement d'oscillation (30) supporte la pluralité de premiers organes d'ajustement d'oscillation (28, 29) de telle sorte qu'une position dans la direction de pressage puisse être ajustée pour la pluralité de premiers organes d'ajustement d'oscillation (28, 29) les uns par rapport aux autres en faisant osciller le deuxième organe d'ajustement d'oscillation (30), le premier organe d'ajustement d'oscillation (28, 29) est disposé de telle sorte qu'un organe de garniture (21) soit supporté au niveau de chacune de deux parties d'extrémité du premier organe d'ajustement d'oscillation (28, 29),

le deuxième organe d'ajustement d'oscillation (30) est disposé de telle sorte qu'un premier organe d'ajustement d'oscillation (28, 29) soit supporté au niveau de chacune de deux parties d'extrémité de deuxième organe d'ajustement d'oscillation (30),

le mécanisme d'ajustement d'oscillation (41) supporte chacun des premiers organes d'ajustement d'oscillation (28, 29) à une position intermédiaire entre deux parties d'extrémité du premier organe d'ajustement d'oscillation (28, 29), et supporte de manière oscillante le deuxième organe d'ajustement d'oscillation (30) à une position intermédiaire entre deux parties d'extrémité du deuxième organe d'ajustement d'oscillation (30),

les premiers organes d'ajustement d'oscillation (28, 29) supportés au niveau des deux parties d'extrémité du deuxième organe d'ajustement d'oscillation (30) sont chacun disposés de telle sorte qu'une direction en longueur de ceux-ci s'étende le long d'une direction parallèle à une direction tangentielle à un cercle centré autour de l'axe de rotation central du disque (103),

le deuxième organe d'ajustement d'oscillation (30) est disposé de telle sorte qu'une direction en longueur de celui-ci s'étende le long d'une direction parallèle à la direction radiale du disque (103) centrée autour d'un axe de rotation central du disque (103),

parmi les premiers organes d'ajustement d'oscillation (28, 29) supportés au niveau des deux portions d'extrémité du deuxième organe ajustement d'oscillation (30), un premier organe d'ajustement d'oscillation disposé sur le côté extérieur dans la direction radiale du disque (103) est prévu sous forme d'organe d'ajustement d'oscillation extérieure (42a), et un autre premier organe d'ajustement d'oscillation disposé sur le côté intérieur dans la direction radiale du disque (103) est défini comme organe d'ajustement d'oscillation intérieur (42b), et

dans le mécanisme d'ajustement d'oscillation (41), un rapport de la distance dans la direction en longueur du deuxième organe d'ajustement d'oscillation (30) depuis une deuxième position de support qui est la position à laquelle le deuxième organe d'ajustement d'oscillation (30) est supporté dans le mécanisme d'ajustement d'oscillation (41), à une position à laquelle l'organe d'ajustement d'oscillation extérieur (42a) est supporté par rapport au deuxième organe d'ajustement d'oscillation (30), à la distance dans la direction en longueur du deuxième organe d'ajustement d'oscillation (30) depuis la deuxième position de support jusqu'à une position à laquelle l'organe d'ajustement d'oscillation intérieur (42b) est supporté par rapport au deuxième organe d'ajustement d'oscillation (30), est l'inverse d'un rapport de la mesure de la charge dans la direction de pressage générée entre le disque (103) et la pluralité d'organes de garniture (21) supportés par rapport à l'organe d'ajustement d'oscillation extérieur (42a), à la mesure de la charge dans la direction de pressage générée entre le disque (103) et la pluralité d'organes de garniture (21) supportés par rapport à l'organe d'ajustement d'oscillation intérieur (42b) .

10. Dispositif d'étrier de frein (1) apte à presser une plaquette de frein à disque (10) contre un disque (103) d'un véhicule, le dispositif d'étrier de frein (1) comprenant :

un corps d'étrier (11) qui est équipé d'un dispositif de cylindre de frein (101) dans le dispositif de frein à disque (100), qui doit être attaché de manière à pouvoir tourner dans une direction de rotation de roulement du véhicule par rapport au véhicule, et qui génère une force de freinage en prenant en sandwich le disque (103) avec une paire des plaquettes de frein à disque (10) devant être entraînées par le dispositif de cylindre de frein (101) ; et la paire de plaquettes de freins à disque (10) qui sont attachées au corps d'étrier (11), et la plaquette de frein à disque (10) comprenant :

une pluralité d'organes de garniture (21) qui sont pressés contre une face de freinage par friction (103a) du disque (103) ;
un mécanisme d'ajustement d'oscillation (22 ; 41 ; 43) qui supporte la pluralité d'organes de garniture (21) ;
un organe de support de charge (23) qui supporte une charge générée le long d'une direction parallèle à la face de freinage par friction (103a) ; et
une partie de support de garniture (24) qui supporte le mécanisme d'ajustement d'oscillation (22 ; 41 ; 43), et qui est retenue de manière à pouvoir osciller par rapport au corps d'étrier (11),

le mécanisme d'ajustement d'oscillation (22 ; 41 ; 43) ayant

un premier organe d'ajustement d'oscillation (28, 29) qui supporte de manière oscillante la pluralité d'organes de garniture (21), et
un deuxième organe d'ajustement d'oscillation (30) qui supporte une pluralité des premiers organes d'ajustement d'oscillation (28, 29),

la pluralité des premiers organes d'ajustement d'oscillation (28, 29) étant supportés de telle sorte qu'une position dans une direction perpendiculaire à la face de freinage par friction (103a) puisse être ajustée pour la pluralité de premiers organes d'ajustement d'oscillation (28, 29) les uns par rapport aux autres en faisant osciller le deuxième organe d'ajustement d'oscillation (30),
la pluralité d'organes de garniture (21) ayant chacun une partie de corps (21a) et une partie de contact (21b) qui fait saillie depuis la partie de corps (21a),
l'organe de support de charge (23) ayant une partie de plaque (33) pourvue d'une pluralité de trous traversants (33a) pour l'insertion des parties de contact (21b),
la partie de support de garniture (24) ayant une partie de base (36), et
la partie de base (36) supportant de manière oscillante le deuxième organe d'ajustement d'oscillation (30) dans un état de support de la partie de plaque (33), et étant accouplée de manière oscillante au corps d'étrier (11).

FIG. 1

EP 2 713 075 B1

FIG. 2

FIG. 3

EP 2 713 075 B1

FIG. 4

EP 2 713 075 B1

FIG. 5

FIG. 6

EP 2 713 075 B1

FIG. 7

FIG. 8

FIG. 9

EP 2 713 075 B1

FIG. 10

## FIG. 11

FIG. 12

## FIG. 13

FIG. 14

FIG. 15

FIG. 16

EP 2 713 075 B1

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4090499 B
- EP 1717475 A1